Europäisches Patentamt

European Patent Office

Office européen des brevets

(11) Veröffentlichungsnummer : **0 149 504**
**B1**

(12) # EUROPÄISCHE PATENTSCHRIFT

(45) Veröffentlichungstag der Patentschrift :
23.11.89

(21) Anmeldenummer : 85200036.3

(22) Anmeldetag : 16.01.85

(51) Int. Cl.⁴ : **G 11 B 15/02**

(54) **Aufzeichnungs- und/oder Wiedergabegerät.**

(30) Priorität : 18.01.84 AT 149/84

(43) Veröffentlichungstag der Anmeldung :
24.07.85 Patentblatt 85/30

(45) Bekanntmachung des Hinweises auf die Patenterteilung : 23.11.89 Patentblatt 89/47

(84) Benannte Vertragsstaaten :
DE FR GB

(56) Entgegenhaltungen :
DE–A– 2 658 603
DE–A– 2 718 137
US–A–   491 111

(73) Patentinhaber : **N.V. Philips' Gloeilampenfabrieken**
**Groenewoudseweg 1**
**NL-5621 BA Eindhoven (NL)**

(72) Erfinder : **Hutterer, Heribert**
**P/A INT. OCTROOIBUREAU B.V. Prof. Holstlaan 6**
**NL-5656 AA Eindhoven (NL)**
Erfinder : **Veigl, Johann**
**P/A INT. OCTROOIBUREAU B.V. Prof. Holstlaan 6**
**NL-5656 AA Eindhoven (NL)**

(74) Vertreter : **Smit, Frederik Jan et al**
**INTERNATIONAAL OCTROOIBUREAU B.V. Prof. Hols-**
**tlaan 6**
**NL-5656 AA Eindhoven (NL)**

EP 0 149 504 B1

Jouve, 18, rue St-Denis, 75001 Paris, France

## Beschreibung

Die Erfindung bezieht sich auf ein Aufzeichnungs- und/oder Wiedergabegerät mit mindestens einer entgegen der Kraft einer Rückstellfeder von einer Ausschaltlage in eine Einschaltlage verstellbaren Taste zum Einschalten einer Betriebsart im Gerät, mit mindestens einem durch Verstellen der Taste von ihrer Ausschaltlage in ihre Einschaltlage von einer Ruhelage in eine Betriebslage verstellbaren Geräteteil, der in seiner Betriebslage die Betriebsart einschaltet, mit einer zur gegebenenfalls unterbindbaren Verstellbewegungsübertragung auf den Geräteteil vorgesehenen Verstelleinrichtung, mit einem zwischen einer Freigabelage und einer Verriegelungslage verstellbaren Verriegelungsteil für die Taste, der in seiner Verriegelungslage die Taste entgegen der Kraft der Rückstellfeder in ihrer Einschaltlage festhält, und mit mindestens einem zwischen einer Freigabelage und einer Blockierlage verstellbaren, je nach seiner Lage das Einschalten der Betriebsart freigebenden oder blockierenden Steuerteil, der in seiner Blockierlage die Verstellung des Verriegelungsteiles in seine Verriegelungslage und die Verstellbewegungsübertragung mit der Verstelleinrichtung auf den Geräteteil zur Verstellung desselben in seine Betriebslage unterbindet.

Ein solches Gerät is beispielsweise aus der De-As 26 58 603 bekannt. Bei diesem bekannten Gerät wirkt der als Schieber ausgebildete Steuerteil, der hierbei zum Abtasten eines durch einen abbrechbaren Lappen gebildeten Kennzeichens einer Magnetbandkassette vorgesehen ist, unmittelbar mit der durch einen Schubhebel gebildeten Verstelleinrichtung zur Steuerung derselben und mit dem Verriegelungsteil für die Taste zusammen. Der Steuerteil führt somit zwei Steuerfunktionen aus, die zur Erzielung eines einwandfreien Betriebsverhaltens genau aufeinander abgestimmt sein müssen, was zu einer relativ komplizierten Ausbildung des Steuerteiles führt. Dadurch, dass der Steuerteil mit der Verstelleinrichtung zusammenwirkt und diese steuert, kann es bei einer beispielsweise aufgrund von Abnützungserscheinungen auftretenden Fehlsteuerung trotz in seiner Blockierlage befindlichem Steuerteil zu einer unerwünschten Verstellung des Geräteteils kommen, welches Fehlverhalten selbstverständlich nachteilig und unerwünscht ist. Dadurch, dass der Steuerteil mit dem Verriegelungsteil zusammenwirkt und diesen bei vorhandenem Kennzeichen der Kassette, wobei dann der Steuerteil seine Freigabelage einnimmt, zum Festhalten der Taste in ihrer Einschaltlage freigibt, wird bei einer Tastenbetätigung zum Einschalten der Betriebsart im normalen Betriebsfall der als Magnetkopfträger ausgebildete Geräteteil über die durch den Schubhebel gebildete Verstelleinrichtung in seine betriebslage verstellt und die Taste von dem Verriegelungsteil ihrer Einschaltlage festgehalten, wobei durch das Festhalten der Taste in ihrer Einschaltlage dem Benützer signalisiert wird, dass die Betriebsart im Gerät eingeschaltet ist. Es kann nun aber bei einer solchen Tastenbetätigung auch der Fall eintreten, das aufgrund von Gebrechen oder Betriebsstörungen überhaupt keine Verstellung des Geräteteiles in seine Betriebslage erfolgt, also der Geräteteil in seiner Ruhelage verbleibt und die Betriebsart nicht eingeschaltet wird, wobei trotzdem die Taste von dem Verriegelungsteil in ihrer Einschaltlage festgehalten wird. In diesem Störungsfall wird dann dem Benützer des Gerätes durch das Festhalten der Taste in ihrer Einschaltlage fälschlicherweise das ordnungsgemässe Einschalten der Betriebsart im Gerät signalisiert, welche Fehlinformation selbstverständlich auch nachteilig und unerwünscht ist.

Die Erfindung hat sich zur Aufgabe gestellt, bei einem Gerät der Eingangs angeführten Gattung die vorstehend erläuterten Probleme zu vermeiden und ein Gerät zu schaffen, bei dem ein Fehlverhalten und eine Fehlinformation wie beim bekannten Gerät ausgeschlossen ist und eine Verstellung des Geräteteiles in seine Betriebslage bei in seiner Blockierlage befindlichem Steuerteil verhindert ist und eine Signalisierung über eine im Gerät eingeschaltete Betriebsart durch Festhalten der Taste zum Einschalten dieser Betriebsart in ihrer Einschaltlage nur dann erfolgt, wenn der Geräteteil, der in seiner Betriebslage die Betriebsart einschaltet, tatsächlich aus seiner Ruhelage in seine Betriebslage verstellt wird. Hierzu ist die Erfindung dadurch gekennzeichnet, dass der Steuerteil mit dem Geräteteil zusammenwirkt und dass der Verriegelungsteil mit dem Geräteteil gekoppelt ist, wobei der Geräteteil bei der Verstellung in seine Betriebslage die Verstellung des Verriegelungsteiles in seine Verriegelungslage steuert.

Dadurch, dass der Steuerteil nunmehr direkt mit dem Geräteteil zusammenwirkt, ist eine einfache Ausbildung mit einer hohen Betriebssicherheit erreicht und eine ungewollte Verstellung des Geräteteiles in seine Betriebslage bei in seiner Blockierlage befindlichem Steuerteil mit Sicherheit vermieden. Weiters ist dadurch, dass der Verriegelungsteil nunmehr vom Geräteteil selbst gesteuert ist, wobei der Geräteteil bei der Verstellung in seine Betriebslage die Verstellung des Verriegelungsteiles in seine Verriegelungslage steuert, die Taste nur dann vom Verriegelungsteil in ihrer Einschaltlage festhaltbar, wenn der Geräteteil tatsächlich von seiner Ruhelage in seine Betriebslage verstellt wird. Bei der durch das Festhalten der Taste in ihrer Einschaltlage vorliegenden Signalisierung ist daher nunmehr jegliche Fehlinformation für den Benützer des Gerätes ausgeschlossen, da diese Signalisierung nur dann erfolgt, wenn im Gerät mit Sicherheit die Betriebsart tatsächlich eingeschaltet wird. Der Zeitpunkt, wann der vom Geräteteil bei dessen Verstellung von seiner Ruhelage in seine Betriebslage in seine Verriegelungslage gesteuerte Verriegelungsteil seine Verriegelungslage erreicht und damit die Taste in ihrer Einschaltlage festhält, kann hierbei innerhalb der Zeitdauer der Verstellung des Geräteteiles beliebig gewählt werden.

Der Geräteteil kann nur in einer Verstellrichtung von seiner Ruhelage in seine Betriebslage verstellbar sein, wobei bei in seiner Freigabelage befindlichem Steuerteil die Verstelleinrichtung den Geräteteil in dieser Verstellrichtung von seiner Ruhelage in seine Betriebslage verstellt und bei in seiner Blockierlage befindlichem Steuerteil derselbe in den Verstellweg des Geräteteiles gebracht ist, so dass derselbe eine Verstellung des Geräteteiles in seine Betriebslage blockiert, wobei aber dann der Steuerteil die von der Verstelleinrichtung auf den Geräteteil ausgeübte Verstellkraft aufnehmen muss, was eine relativ hohe Beanspruchung des Steuerteiles zur Folge hat. Es hat sich deshalb als vorteilhaft erwiesen, wenn der Geräteteil in einer ersten Verstellrichtung von seiner Ruhelage in eine Zwischenlage und in einer zweiten Verstellrichtung von seiner Zwischenlage in seine Betriebslage verstellbar ist, eine mit dem Geräteteil zusammenwirkende Freigabeeinrichtung vorgesehen ist, die beim Verstellen der Taste in ihre Einschaltlage den Geräteteil zur Verstellung durch die Kraft einer an demselben angreifenden Verstellfeder in der ersten Verstellrichtung von einer Ruhelage in seine Zwischenlage freigibt, die Verstellung des Geräteteiles in seine Zwischenlage durch den mit demselben zusammenwirkenden Steuerteil in dessen Blockierlage blockiert un in dessen Freigabelage freigegeben ist, und bei vom Steuerteil blockiertem Geräteteil die Verstelleinrichtung zur Unterbindung der Verstellbewegungsübertragung auf den Geräteteil ausser Eingriff mit demselben bleibt und bei in seine Zwischenlage verstelltem Geräteteil die Verstelleinrichtung zur Verstellbewegungsübertragung auf den Geräteteil mit demselben zu seiner Verstellung in der zweiten Verstellrichtung von seiner Zwischenlage in seine Betriebslage in Eingriff bringbar ist. Hierdurch ist erreicht, dass der mit dem Geräteteil zusammenwirkende Steuerteil in seiner Blockierlage nur die relativ geringe Kraft der Verstellfeder aufzunehmen hat, so dass nur eine geringe Belastung des Steuerteiles und damit eine hohe Betriebssicherheit und Lebensdauer erreicht ist.

Zum Freigeben der Verstellung des Geräteteiles in der ersten Verstellrichtung von seiner Ruhelage in seine Zwischenlagekann eine separate Freigabeeinrichtung vorgesehen sein, die beispielsweise einen beim Verstellen der Taste in ihre Einschaltlage aus dem Verstellweg des Geräteteiles verstellbaren Freigabehebel aufweist. Als vorteilhaft hat sich erwiesen, wenn die Freigabeeinrichtung durch einen im wesentlichen entgegen der ersten Verstellrichtung des Geräteteiles von der Taste abstehenden ersten Ansatz gebildet ist und der Geräteteil einen im wesentlichen quer zur ersten Verstellrichtung verlaufenden, zum Zusammenwirken mit dem ersten Ansatz vorgesehenen Fortsatz aufweist der sich bei in ihrer Ausschaltlage befindlicher Taste durch die Kraft der Verstellfeder am ersten Ansatz abstützt, wobei beim Verstellen der Taste in ihre Einschaltlage der erste Ansatz mitverstellt und dabei der Fortsatz des Geräteteiles zur Verstellung desselben durch die Kraft der Verstellfeder in der ersten Verstellrichtung von seiner Ruhelage in seine Zwischenlage freigegeben ist. Hierdurch ist erreicht, dass die Taste selbst die Freigabe des Geräteteiles zur Verstellung von seiner Ruhelage in seine Zwischenlage bewirkt, was im Hinblick auf eine einfache Ausbildung und sichere Funktionsweise vorteilhaft ist.

Der Verriegelungsteil kann mit dem Geräteteil beispielsweise über eine Hebelanordnung kraftschlässig gekoppelt sein. Auch kann zur kraftschlüssigen Kopplung zwischen dem Geräteteil und dem Verriegelungsteil eine Kulissensteuerung vorgesehen sein. Als besonders vorteilhaft hat sich erwiesen, wenn der Verriegelungsteil durch den Fortsatz des Geräteteiles gebildet ist, der bei in ihre Einschaltlage verstellter Taste den ersten Ansatz derselben bei in seine Zwischenlage verstelltem Geräteteil zum Festhalten der Taste in ihrer Einschaltlage hintergreift. Durch die einstückige Ausbildung des Verriegelungsteiles mit dem Geräteteil und die zusätzliche Ausnützung des ersten Ansatzes zum Verriegeln der Taste in ihrer Einschaltlage ist eine besonders einfache Ausbildung erreicht, die zusätzlich im Hinblick auf Stabilität und Betriebssicherheit vorteilhaft ist. Durch das Intergreifen des ersten Ansatzes der Taste mit dem als Verriegelungsteil ausgenützten Fortsatz des Geräteteiles wird die Taste schon im Zuge des Ablaufes der Verstellbewegung des Geräteteiles von seiner Ruhelage in seine Betriebslage zum Einschalten der Betriebsart in ihrer Einschaltlage festgehalten, wodurch vorteilhafterweise die Taste schon kurz nach ihrer Betätigung verriegelt und daher dem Benützer rasch eine Signalisierung über das Einschalten der gewählten Betriebsart im Gerät gegeben wird, wobei der Vorgang hierfür zwar noch nicht abgeschlossen, aber aufgrund des bereits stattfindenden Ablaufes desselben praktisch sichergestellt und daher das tatsächliche Einschalten der Betriebsart gewährleistet ist.

Als vorteilhaft hat sich auch erwiesen, wenn der Verriegelungsteil durch einen Abschnitt des Geräteteiles gebildet sit und die Taste eine im wesentlichen entgegen der zweiten Verstellrichtung des Geräteteiles von derselben abstehenden zweiten Ansatz aufweist, den der als Verriegelungsteil vorgesehene Abschnitt des Geräteteiles bei in ihre Einschaltlage verstellter Taste und in seine Betriebslage verstellten Geräteteil zum Festhalten der Taste in ihrer Einschaltlage hintergrieft.

Auch hierdurch ist eine einfache stabile und betriebssichere Ausbildung erreicht. Durch das Hintergreifen des zweiten Ansatzes der Taste mit dem als Verriegelungsteil vorgesehenen Abschnitt des Geräteteiles wird die Taste erst gegen Ende des Ablaufes der Verstellbewegung des Geräteteiles von seiner Ruhelage in seine Betriebslage zum Einschalten der Betriebsart in ihrer Einschaltlage festgehalten, wodurch vorteilhafterweise die Taste erst dann verriegelt und daher dem Benützer erst dann eine Signalisierung über das Einschalten der gewählten Betriebsart im Gerät gegeben wird, wenn der Vorgang hierfür praktisch bereits beendet und daher das tatsächliche Einschalten der Betriebsart gewährleistet ist.

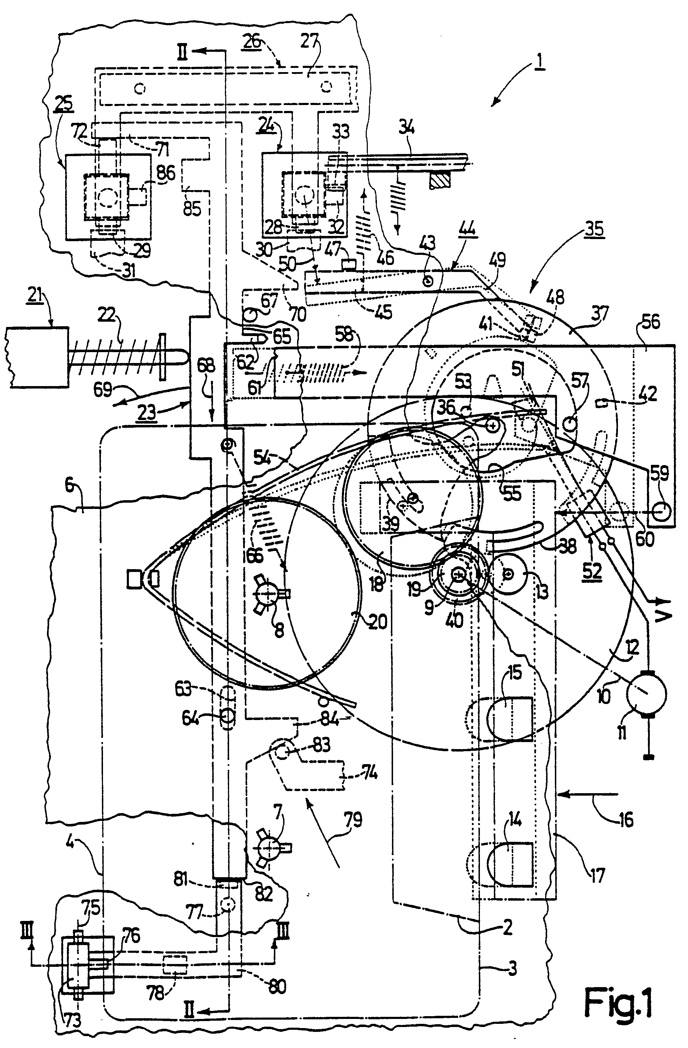

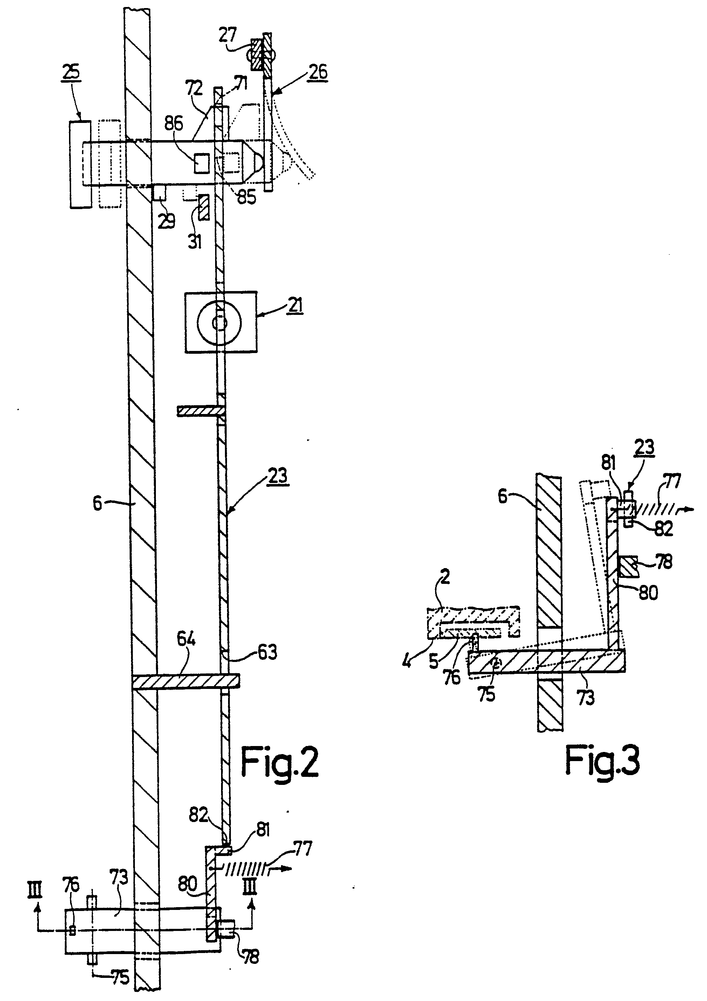

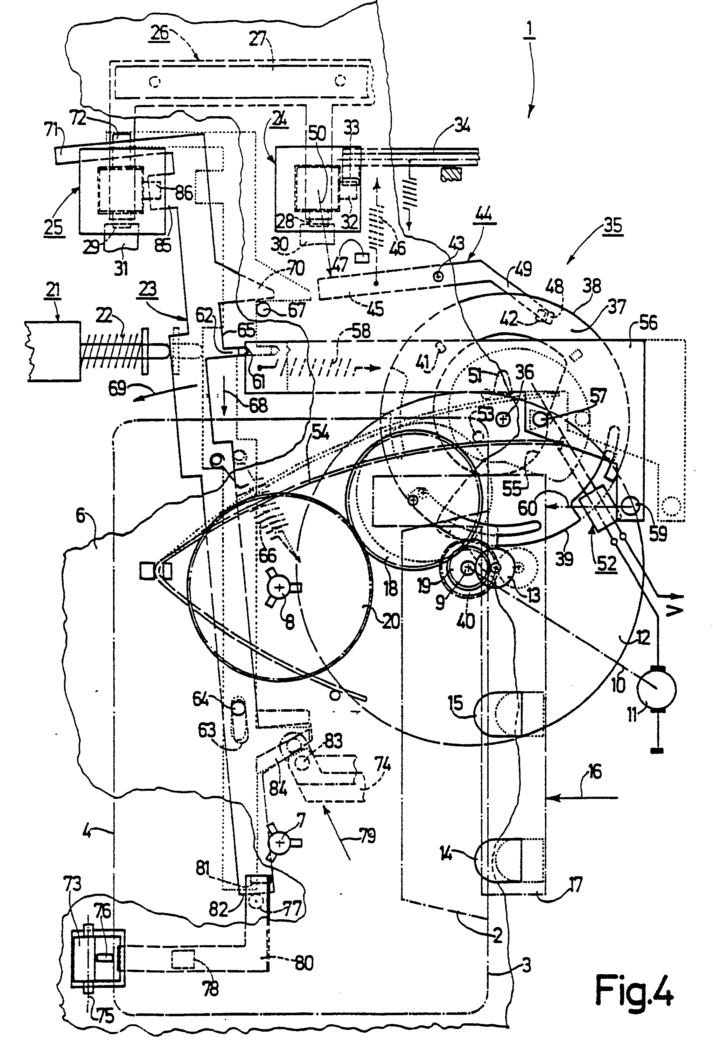

Die Erfindung wird im folgende anhand von drei in den Zeichnungen dargestellten Ausführungsbeispielen, auf welche sie jedoch nicht beschränkt sein soll, näher beschrieben. Die Fig. 1 zeigt als erstes Ausführungsbeispiel schematisch in Draufsicht den erfindungswesentlichen Teil eines Kassettenmagnetbandgerätes zum Aufzeichnen und Wiedergeben von Informationssignalen, wobei die Geräteteile mit vollen Linien in ihrer Ruhelage, wobei im Gerät keine Betriebsart eingeschaltet ist, und mit punktierten Linien in ihrer Betriebslage dargestellt sind, die sie bei im Gerät eingeschalteter Betriebsart « Wiedergabe » einnehmen, und bei dem eine Taste zum Einschalten der Betriebsart « Aufnahme » erst am Ende der Verstellung eines Geräteteiles zum Einschalten der Betriebsart « Aufnahme » verriegelt wird. Die Fig. 2 zeigt schematisch im Schnitt längs der Linie II-II in Fig. 1 ein Detail des Gerätes gemäss Fig. 1, wobei die Taste zum Einschalten der Betriebsart « Aufnahme » in ihrer Ausschaltlage mit vollen Linien und in ihrer Einschaltlage mit punktierten linien dargestellt ist. Die Fig. 3 zeigt schematisch im Schnitt längs der Linie III-III in den Figuren 1 und 2 ein weiteres Detail des Gerätes gemäss Fig. 1, wobei ein Steuerteil in seiner Blockierlage mit vollen Linien und in seiner Freigabelage mit punktierten Linien dargestellt ist. Die Fig. 4 zeigt analog wie Fig. 1 das Gerät gemäss Fig. 1, wobei die Geräteteile mit punktierten Linien je in einer Zwischenlage, die sie kurz nach dem Einschalten der Betriebsart « Aufnahme » einnehmen, und mit vollen Linien in ihrer Betriebslage dargestellt sind, die sie bei im Gerät eingeschalteter Betriebsart « Aufnahme » einnehmen.

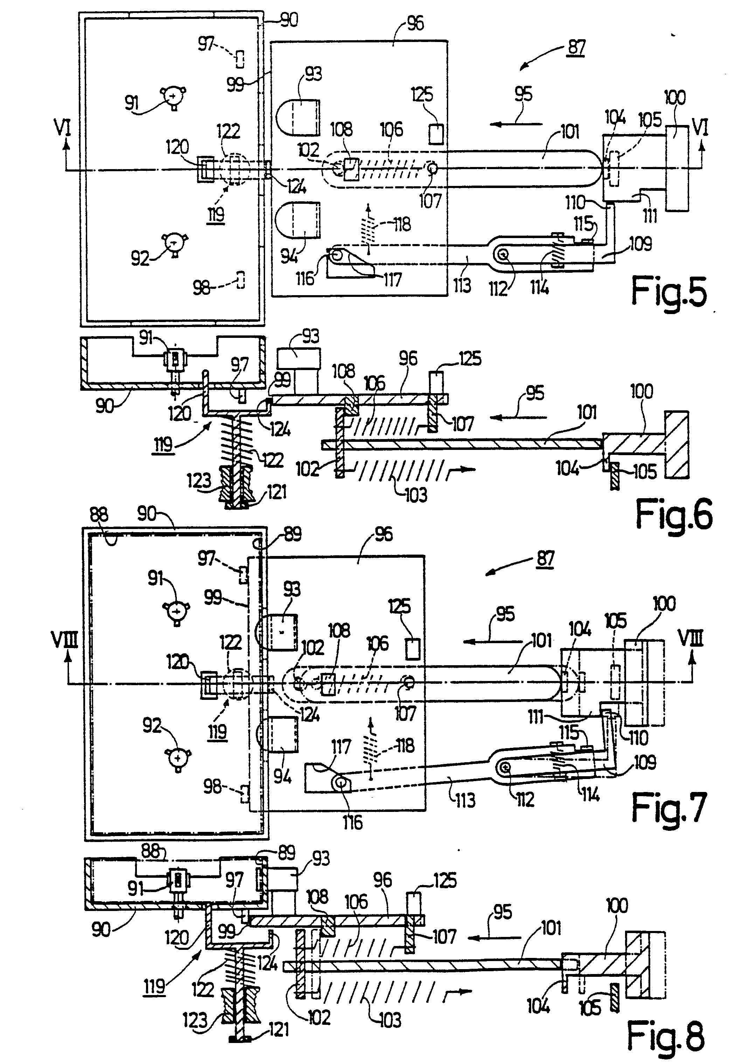

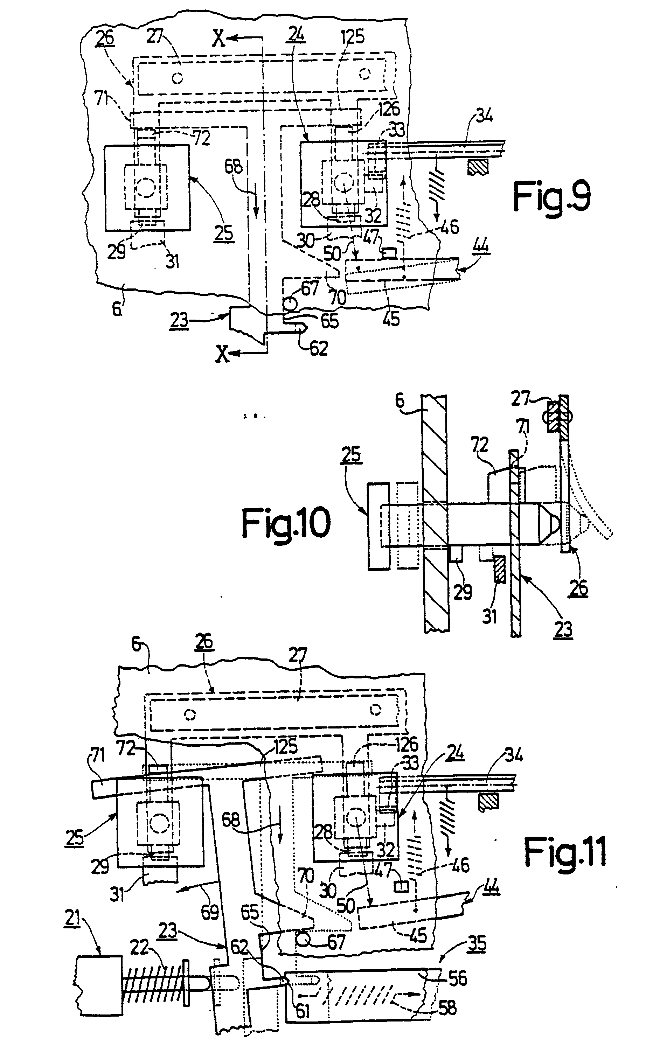

Die Fig. 5 zeigt als zweites Ausführungsbeispiel schematisch in Draufsicht den erfindungswesentlichen Teil eines Kassettenmagnetbandgerätes zum Wiedergeben von Diktatsignalen, in dem eine Betriebsart « Schnell-Löschen » zum Löschen der Diktatsignale einschaltbar ist, wobei in dem Gerät keine Betriebsart eingeschlatet ist und die Geräteteile in ihrer Ruhelage dargestellt sind. Die Fig. 6 zeigt im Schnitt längs der Linie VI-VI einen Teil des Gerätes gemäss Fig. 5, wobei ein Steuerteil seine Blockierlage einnimmt. Die Fig. 7 zeigt analog wie Fig. 5 dieses Gerät, wobei im Gerät die Betriebsart « Schnell-Löschen » eingeschaltet ist und die Geräteteile in ihrer Betriebslage sind. Die Fig. 8 zeigt im Schnitt längs der Linie VIII-VIII einen Teil des Gerätes gemäss Fig. 7, wobei der Steuerteil seine Freigabelage einnimmt. Die Fig. 9 zeigt in analoger Darstellungsweise wie in Fig. 1 als drittes Ausführungsbeispiel teilweise ein Kassettenmagnetbandgerät, das gegenüber dem in den Figuren 1 bis 4 dargestellten Gerät hinsichtlich des Zeitpunktes der Verriegelung der Taste zum Einschalten der Betriebsart « Aufnahme » abgeändert ist, wobei die Verriegelung dieser Taste bereits während der Verstellung des Geräteteiles zum Einschalten der Betriebsart « Aufnahme » erfolgt. Die Fig. 10 zeigt analog wie die Fig. 2 im Schnitt längs der Linie X-X in Fig. 9 die Taste zum Einschalten der Betriebsart « Aufnahme ». Die Fig. 11 zeigt in analoger Darstellungsweise wie in Fig. 4 das Gerät gemäss Fig. 9.

Das in Fig. 1 dargestellte Kassettenmagnetbandgerät 1 ist zum Zusammenwirken mit einer in den Figuren 1, 3 und 4 nur symbolisch mit strichpunktierten Linien angedeuteten Magnetbandkassette 2 ausgebildet, die zwei nebeneinanderliegende Magnetbandwickel enthält und in der das Magnetband längs einer langen Schmalseite 3 von einem zum anderen Magnetbandwickel geführt ist. Die Magnetbandkassette 2 weist in den beiden Endbereichen ihrer anderen langen Schmalseite 4 je einen abbrechbaren Lappen 5 auf, wie dies in Fig. 3 schematisch mit punktierten Linien dargestellt ist. Bei von der Kassette abgebrochenen Lappen 5 darf keine Löschung der auf dem Magnetband gespeicherten Informationssignale erfolgen ; sind hingegen die Lappen 5 an der Magnetbandkassette vorhanden, dann darf eine Löschung der auf dem Magnetband gespeicherten Informationssignale und eine nachfolgende Neuaufzeichnung erfolgen.

Zum Antreiben der beiden Magnetbandwickel der Magnetbandkassette 2 weist das Gerät 1 zei beim Einsetzen der Kassette in das Gerät mit den Magnetbandwickeln in Antriebsverbindung bringbare, an einer Montageplatte 6 drehbar gelagerte Wickeldorne 7 und 8 auf. Um das Magnetband in den Betriebsarten « Schneller Vorlauf » und « Schneller Rücklauf » von einem zum anderen Magnetbandwickel schnell umspulen zu können, ist jeder der beiden Wickeldorne 7 und 8 von einer nicht dargestellten Umspulantriebseinrichtung mit hoher Drehgeschwindigkeit antreibbar, wie dies allgemein bekannt ist.

In den Betriebsarten « Wiedergabe » und « Aufnahme » wird das Magnetband im sogenannten « Normalen Vorlauf » mit konstanter Fortbewegungsgeschwindigkeit angetrieben. Hiefür weist das Gerät eine in der Montageplatte 6 drehbar gelagerte, dieselbe durchsetzende Antriebswelle 9 auf, die über eine mit einer strichpunktierten Linie angedeutete Antriebsverbindung 10 von einem Motor 11 her mit konstanter Drehzahl antreibbar ist, wobei die Antriebswelle 9 zur Verbesserung des Gleichlaufes mit einer gemäss Fig. 1 Unterhalb der Montageplatte 6 angeordneten koaxialen Schwungscheibe 12 drehfest verbunden ist. Die Antriebsverbindung 10 kann beispielsweise durch einen vom Motor 11 mit einer Riemenscheibe angetriebenen, um die Schwungscheibe geschlungenen Riemen gebildet sein. Eine zum Zusammenwirken mit der Antriebswelle 9 vorgesehene Andruckrolle 13 ist gemeinsam mit einem Lösch-Magnetkopf 14 zum Löschen von auf dem Magnetband gespeicherten Informationssignalen und einem Aufnahme/Wiedergabe-Magnetkopf 15 zum Aufzeichnen bzw. Wiedergeben von Informationssignalen auf das bzw. von dem Magnetband auf einer der Übersicht halber nur mit strichpunktierten Linien angedeuteten, auf nicht näherer dargestellte Weise in Richtung des Pfeiles 16 senkrecht zur Schmalseite 3 der Magnetbandkassette 2 oberhalb der Montageplatte 6 an derselben verschiebbar geführten Trägerplatte 17 angeordnet, die entgegen der Kraft einer nicht dargestellten Rückstellfeder in Richtung des Pfeiles 16 aus ihrer in Fig. 1 mit strichpunktierten Linien dargestellten Ruhelage in ihre in Fig. 1 mit punktierten Linien dargestellte Betriebslage verschiebbar ist. Die Ruhelage und die Betriebslage der Trägerplatte 17 sind beispielsweise je durch an der Montageplatte vorgesehene Positionieranschläge festgelegt. Ferner ist mit der Trägerplatte 17 ein an der Montageplatte 6 verstellbar gelagertes Zwischenzahnrad 18 gekoppelt, das einerseits mit einem auf die Antriebswelle 9 drehfest aufgesetzten ersten Zahnritzel 19 ständig in Eingriff steht und durch Verstellung der Trägerplatte 17 in Richtung des Pfeiles 16 mit einem zum Wickeldorn 8 koaxialen Zahnrad 20 in Eingriff bringbar ist, von dem bei im « Normalen Vorlauf » angetriebenem Magnetband über eine nicht dargestellte Rutschkupplung der Wickeldorn 8 antreibbar ist. Das Zahnritzel 19, das Zwischenzahnrad 18 und das Zahnrad 20 liegen in einer Ebene oberhalb der Montageplatte 6. Um das Magnetband im « Normalen Vorlauf » anzutreiben, wird die Trägerplatte 17 in ihre Betriebslage verstellt, in welcher dann die Andruckrolle 13 das Magnetband an die vom Motor 11 angetriebene Antriebswelle 9 andrückt, das Zwischenzahnrad 18 die Antriebsverbindung von dem mit der Antriebswelle 9 verbundenen ersten Zahnritzel 19 zum Zahnrad 20 zum Antrieben des Wickeldornes 8 herstellt und die Magnetköpfe 14 und 15 zum Abtasten des Magnetbandes mit demselben in Kontakt stehen.

Um die Betriebsart « Wiedergabe » im Gerät einzuschalten, ist nur die Trägerplatte 17 in Richtung des Pfeiles 16 aus ihrer Ruhelage in ihre Betriebslage zu verstellen, wobei dann die Andruckrolle 13, das Zwischenzahnrad 18 und die beiden Magnetköpfe 14 und 15 ihre vorerwähnten Betriebslagen einnehmen. Die Trägerplatte 17 stellt somit einen von einer Ruhelage in eine Betriebslage verstellbaren Geräteteil dar, der in seiner Betriebslage die Betriebsart « Wiedergabe » einschaltet. Ein sogenannter Aufnahme/Wiedergabe-Umschalter 21 nimmt hierbei, wie dies in Fig. 1 gezeigt ist, seine Ruhelage ein, in der er bewirkt, dass dem Lösch-Magnetkopf 14 kein Löschsignal zugeführt wird und der Aufnahme/Wiedergabe-Magnetkopf 15 and die elektrische Wiedergabeschaltung des Gerätes angeschaltet ist.

Um die Betriebsart « Aufnahme » im Gerät einzuschalten, muss zusätzlich zur Verstellung der Trägerplatte 17 in Richtung des Pfeiles 16 aus ihrer Ruhelage in ihre Betriebslage der Aufnahme/Wiedergabe-Umschalter 21 entgegen der Kraft einer als Druckfeder ausgebildeten Rückstellfeder 22 in seine in Fig. 4 dargestellte Arbeitslage geschaltet werden, in der er bewirkt, dass dem Lösch-Magnetkopf 14 ein Löschsignal zugeführt wird und der Aufnahme/Wiedergabe-Magnetkopf 15 an die elektrische Aufnahmeschaltung des Gerätes angeschaltet ist. Es ist zu erwähnen, dass bei einer Rückkehr des Aufnahme-Wiedergabe-Umschalters 21 in seine Ruhelage und hierbei in ihrer Betriebslage belassener Trägerplatte 17 im Gerät automatisch eine Umschaltung von der Betriebsart « Aufnahme » in die Betriebsart « Wiedergabe » erfolgt. Zum Schalten des Aufnahme/Wiedergabe-Umschalters 21 weist das Gerät 1 einen von einer Ruhelage in eine Betriebslage verstellbaren Schubhebel 23 auf, an dem sich das freie Ende des Schaltstössels des Aufnahme/Wiedergabe-Umschalters 21 mit der Kraft der Rückstellfeder 22 abstützt. Der Schubhebel 23, dessen Ausbildung und Funktionsweise im folgenden noch detailliert erläutert ist, schaltet den Aufnahme/Wiedergabe-Umschalter 21 bei seiner Verstellung in seine Betriebslage, die in Fig. 4 dargestellt ist, in seine Arbeitslage um. Es stellt somit der Schubhebel 23 einen von einer Ruhelage in eine Betriebslage verstellbaren Geräteteil dar, der in seiner Betriebslage die Betriebsart « Aufnahme » einschaltet.

Zum Einschalten der Betriebsarten des Gerätes weist dasselbe Drucktasten auf, von welchen in den Figuren 1 und 4 zwei Drucktasten 24 und 25 zum Einschalten der Betriebsarten « Wiedergabe » und « Aufnahme » dardargestellt sind. Zum Einschalten der Betriebsart « Wiedergabe » muss die Drucktaste 24 betätigt werden. Zum Einschalten der Betriebsart « Aufnahme » muss zusätzlich zur Drucktaste 24 zugleich auch die Drucktaste 25 betätigt werden ; die alleinige Betätigung der an sich zum Einschalten der Betriebsart « Aufnahme » vorgesehenen Drucktaste 25 bleibt wirkungslos. Wie aus Fig. 2 erkennbar ist, sind die Drucktasten 24 und 25 je mit ihrem Tastenschaft, auf den ein Tastenkopf aufgesetzt ist, in der Montageplatte 6 senkrecht zu derselben geführt und zwischen einer Ausschaltlage und einer Einschaltlage entgegen der Kraft einer Rückstellfeder 26 verstellbar. Die Rückstellfeder 26 ist durch eine Mehrarmige Blattfeder gebildet, die mit ihrem Basisteil an einem Zwischenträger 27 befestigt ist und von der je ein Arm mit dem abgerundeten freien Ende einer Drucktaste 24 bzw. 25 zusammenwirkt. Die Ausschaltlage jeder Drucktaste 24 bzw. 25 ist dadurch festgelegt, dass sich ein von derselben abstehender Vorsprung 28 bzw. 29 unter der Kraft der Rückstellfeder 26 an der Unterseite der Montageplatte 6 abstützt.

Die Einschaltlage jeder Drucktaste 24 bzw. 25 ist im wesentlichen dadurch festgelegt, dass beim Drücken jeder Taste der Vorsprung 28 bzw. 29 derselben gegen einen geräteseitigen Anschlag 30 bzw. 31 stösst. Zum Festhalten der Drucktaste 24 in ihrer Einschaltlage weist dieselbe einen Rastansatz 32 auf, der bei in ihrer Einschaltlage befindlicher Drucktaste 24 von einer Rastnase 33 einer federbelasteten schwenkbaren Rastschiene 34 festhaltbar ist. Die Rastschiene 34 wirkt mit zwei weiteren nicht dargestellten Rastnasen mit den ebenfalls nicht dargestellten Drucktasten zum Einschalten der Betriebsarten « Schneller Vorlauf » und « Schneller Rücklauf » zum Festhalten derselben in ihren Einschaltlagen zusammen und ist beispielsweise von einer Drucktaste zum Einschalte der Betriebsart « STOP » in eine solche Lage verstellbar, dass sie die Rastnasen der mit ihr zusammenwirkenden Drucktasten freigibt, wonach dann die freigegebenen Drucktasten durch die Kraft der an ihnen angreifenden Federarme der Rückstellfeder 26 in ihre Ausschaltlage zurückkehren.

Zur Verstellung der Trägerplatte 17 und des Schubhebels 23 weist das Gerät als Verstelleinrichtung einen motorisch antreibbaren Servomechanismus 35 auf, der durch eine Betätigung der Drucktaste 24 in Betrieb setzbar ist und der die Betätigungskräfte zum Verstellen der Trägerplatte 17 und des Schubhebels 23 liefert. Durch das Vorsehen eines solchen Servomechanismus ist erreicht, dass mit besonders kleinen Kräften zur Betätigung der Drucktaste 24 das Auslangen gefunden wird, so dass sich eine einfache und leichtgängige Tastenbetätigung ergibt. Der Servomechanismus 35 weist eine gemäss den Figuren 1 und 4 unterhalb der Montageplatte 6 angeordnete, mit einer Welle 36 an derselben drehbar gelagerte Servoscheibe 37 auf, die an ihrem Umfang einen ersten langen Abschnitt 38 mit einer Verzahnung und einen zweiten kurzen Abschnitt 39 mit einer Verzahnung sowie zwei die beiden Verzahnungsabschnitte 38 und 39 voneinander trennende, etwa gleich lange Abschnitte ohne Verzahnung aufweist. Zum Antreiben der Servoscheibe 37 ist mit der Antriebswelle 9 unterhalb der Montageplatte 6 ein zweites Zahnritzel 40 drehfest verbunden, das somit gemeinsam mit der Antriebswelle 9 über die Antriebsverbindung 10 vom Motor 11 des Gerätes 1 antreibbar ist.

Die Servoscheibe 37 ist in vorliegendem Fall in zwei Lagen anhaltbar, in denen das zweite Zahnritzel 40 jeweils einem Abschnitt ohne Verzahnung gegenüberliegt, nämlich in einer in fig. 1 mit vollen Linien dargestellten Ruhelage und einer in Fig. 1 mit punktierten Linien und in Fig. 4 mit vollen Linien dargestellten Betriebslage. Hierfür weist die Servoscheibe 37 an ihrer von der Montageplatte 6 abgewandten unteren Seitenfläche einen in axialer Richtung von derselben abstehenden ersten Arretieranschlag 41 und einen ebenfalls in axialer Richtung von derselben abstehenden zweiten Arretieranschlag 42 auf, der aber einen grösseren radialen Abstand vom Zentrum der Servoscheibe aufweist als der erste Arretieranschlag 41.

Zum Zusammenwirken mit den beiden Arretieranschlägen 41 und 42 ist ein zwischen einer ersten und einer zweiten Arretierlage verstellbarer, um eine in der Montageplatte 6 gelagerte Welle 43 verschwenkbarer, unterhalb der Montageplatte angeordneter zweiarmiger Arretierhebel 44 vorgesehen. An einem ersten Arm 45 des Arretierhebels 44 greift eine Feder 46 an, die danach trachtet, den Arretierhebel 44 in seiner in Fig. 1 mit vollen Linien dargestellten, durch einen in die Montageplatte 6 eingesetzten Anschlag 47 festgelegten ersten Arretierlage zu halten, in der das zur Montageplatte hin nach oben abgewinkelte freie Ende 48 des zweiten Armes 49 des Arretierhebels 44 mit dem ersten Arretieranschlag 41 zusammenwirken kann. Durch Betätigen der Drucktaste 24 ist der Arretierhebel 44 über eine symbolisch mit einer strichpunktierten Linie angedeutete Betätigungsverbindung 50, die am ersten Arm 45 des Arretierhebels 44 angreift, entgegen der Kraft der Feder 46 in seine in Fig. 1 mit punktierten Linien und in Fig. 4 mit vollen Linien dargestellte zweite Arretierlage verstellbar, in der der Arretierhebel von der betätigten, rastend festgehaltenen Drucktaste 24 über die Betätigungsverbindung 50 verschwenkt gehalten bleibt und mit dem zweiten Arretieranschlag 42 zusammenwirken kann. Die Betätigungsverbindung 50 kann beispielsweise durch eine von der Drucktaste 24 verstellbare Hebelanordnung gebildet sein.

Auch kann die Betätigungsverbindung 50 einfach durch einen von der Drucktaste 24 seitlich abstehenden Betätigungsansatz gebildet sein, der über eine gegenüber dem Arretierhebel 44 geneigt verlaufende Betätigungsfläche mit diesem zusammenwirkt.

Die Servoscheibe 37 weist an ihrer von der Montageplatte 6 abgewandten unteren Seitenfläche einen in axialer Richtung von derselben abstehenden, in radialer Richtung höckerförmigen Schaltnocken 51 auf. Der Schaltnocken dient zum Zusammenwirken mit einem schematisch dargestellten elektrischen Schalter 52, der in der in Fig. 1 mit vollen Linien dargestellten Ruhelage der Servoscheibe 37 von dem Schaltnocken 51 geöffnet gehalten ist und dabei eine Speisespannung V vom Motor 11 abgeschaltet hält und in allen anderen Lagen der Servoscheibe 37 von dem Schaltnocken 51 freigegeben und daher geschlossen ist und dabei die Speisespannung V an den Motor 11 angeschaltet hält.

Die Servoscheibe 37 trägt an ihrer von der Montageplatte 6 abgewandten unteren Seitenfläche einen in axialer Richtung von derselben abstehenden Stift 53, an dem eine an Anschlägen an der Montageplatte 6 abgestützte Schenkelfeder 54 angreift, die mehrere Funktionen erfüllt. Die Schenkelfeder 54 hält die Servoscheibe 37 über den Stift 53 in ihrer Ruhelage fest, wobei sich unter der Kraft der Schenkelfeder 54 der erste Arretieranschlag 41 am abgewinkelten Ende 48 des in seiner ersten Arretierlage befindlichen Arretierhebels 44 abstützt.

Nach dem durch eine Tastenbetätigung der Drucktaste 24 über die Betätigungsverbindung 50 ausgelösten verschwenken des Arretierhebels 44 in seine zweite Arretierlage, wobei das abgewinkelte Ende 48 des Arretierhebels 44 den ersten Arretieranschlag 41 freigebit, erteilt die Schenkelfeder 54 über den Stift 53 der Servoscheibe 37 einen mechanischen Impuls. Auf diese Weise wird die Servoscheibe bei einer zuvor erfolgten Tastenbetätigung im Uhrzeigersinn in Drehung versetzt, wodurch der lange Verzahnungsabschnitt 38 mit dem zweiten Zahnritzel 40 an der Antriebswelle 9 in Eingriff kommt. Ferner bringt die Schenkelfeder 54 über den Stift 53 die Servoscheibe 37, nachdem beim Verdrehen derselben das zweite Zahnritzel 40 ausser Eingriff vom langen Verzahnungsabschnitt 38 gekommen ist, in ihre in Fig. 1 mit punktierten Linien und in Fig. 4 mit vollen Linien dargestellte Betriebslage und hält sie danach darin fest, wobei sich unter der Kraft der Schenkelfeder 54 der zweite Arretieranschlag 42 am abgewinkelten Ende 48 des hierbei in seiner zweiten Arretierlage befindlichen Arretierhebels 44 abstützt. Schliesslich bewirkt die Schenkelfeder 54 über den Stift 53 die Verdrehung der Servoscheibe 37 aus ihrer Betriebslage, wenn der Arretierhebel 44 von seiner zweiten Arretierlage wieder in seine erste Arretierlage verstellt ist, was dann der Fall ist, wenn die betätigte, rastend festgehaltene Drucktaste 24 in ihre Ausschaltlage verstellt wurde, wodurch der kurze Verzahnungsabschnitt 39 mit dem zweiten Zahnritzel 40 in Eingriff kommt, so dass die Servoscheibe 37 in ihre Ruhelage verdreht wird. Wenn kurz vor Erreichen der Ruhelage der Servoscheibe 37 das zweite Zahnritzel 40 wieder ausser Eingriff vom kurzen Verzahnungsabschnitt 39 kommt, dann bewirkt die Schenkelfeder 54 über den Stift 53 die weitere Verdrehung der Servoscheibe bis in ihre Ruhelage, in der dieselbe dann auch, wie oben bereits erwähnt, von der Schenkelfeder 54 festgehalten bleibt.

Die Servoscheibe 37 weist an ihrer der Montageplatte 6 zugewandten oberen Seitenfläche eine Vertiefung auf, deren in sich geschlossene umfangsseitige Begrenzungswand 55 in ihrem Verlauf sich teilweise ändernde radiale Abstände vom Zentrum der Servoscheibe aufweist. Die Begrenzungswand 55 bildet somit einen Antriebsexzenter der Servomechanismus 35, der zum Antreiben eines auf nicht näher dargestellte Weise in Richtung des Pfeiles 16 an der Montageplatte 6 verschiebbar geführten Betätigungsschiebers 56 des Servomechanismus 35 dient. Hierfür trägt der Betätigungsschieber 56 einen Stift 57, der in die Vertiefung der Servoscheibe 37 ragt und unter der Kraft einer an dem Betätigungsschieber 56 angreifenden, den Betätigungsschieber entgegen der Richtung des Pfeiles 16 belastenden Feder 58 stets an die Begrenzungswand 55 der Vertiefung angelegt gehalten ist, so dass die Lage des Betätigungsschiebers 56 stets durch die Lage der Servoscheibe 37 festgelegt ist. Selbstverständlich kann als Antriebsexzenter auch eine in eine Seitenfläche der Servoscheibe eingearbeitete, in sich geschlossene Nut vorgesehen sein, in die ein am Betätigungsschieber sitzender Stift mit geringem Spiel hineinragt, wobei sich dann eine am Betätigungsschieber angreifende Feder erübrigt.

Der Betätigungsschieber 56 des Servomechanismus 35 trägt an seinem abgewinkelten freien Ende einen Betätigungsstift 59, der über eine symbolisch mit strichpunktierten Linien angedeutete Betätigungsverbindung 60 mit der Trägerplatte 17 zur Verstellung derselben von ihrer Ruhelage in ihre Betriebslage entgegen der Kraft der an ihr angreifenden Rückstellfeder zusammenwirkt. Die Betätigungsverbindung 60 kann beispielsweise durch einen Hebelmechanismus gebildet sein, sie kann aber auch einfach durch eine mit einem Schenkel an der Trägerplatte abgestützte zweischenkelige Schenkelfeder gebildet sein, die mit ihrem anderen Schenkel mit dem Betätigungsstift 59 zusammenwirkt. Am anderen freien Ende weist der Betätigungsschieber 56 eine Betätigungskerbe 61 auf, die zum Zusammenwirken mit einem abgewinkelten, schneidenförmig ausgebildeten Betätigungsansatz 62 des Schubhebels 23 zur Verstellung desselben in seine Betriebslage vorgesehen ist.

Der Schubhebel 23 weist ein Langloch 63 auf, durch das ein in die Montageplatte 6 eingesetzter erster Führungsstift 64 hindurchgeführt ist, und stäutzt sich mit einer Seitenfläche 65 unter der Kraft einer an ihm angreifenden Verstellfeder 66 an einem zweiten Führungsstift 67 ab. Auf diese Weise ist der Schubhebel 23 mit den beiden Führungsstiften 64 und 67 in einer ersten Verstellrichtung gemäss dem Pfeil 68 von einer in Fig. 1 dargestellten Ruhelage in eine in Fig. 4 mit punktierten Linien dargestellte Zwischenlage verschiebbar und in einer zweiten Verstellrichtung gemäss dem Pfeil 69 von der in Fig. 4 mit punktierten Linien dargestellten Zwischenlage in die in Fig. 4 mit vollen Linien dargestellte Betriebslage verschwenkbar gelagert, wobei der erste Führungsstift 64 das Schwenklager für den Schubhebel 23 bildet. Die Zwischenlage des Schubhebels ist durch einen von demselben seitlich abstehenden Lappen 70 festgelegt, der sich in der Zwischenlage durch die Kraft der Verstellfeder 66 am zweiten Führungsstift 67 abstützt. Die Betriebslage ist selbstverständlich durch den am Betätigungsansatz 62 des Schubhebels 23 angreifenden, in seine Betriebslage verstellten Betätigungsschieber 56 festgelegt.

Die Verstellfeder 66 trachtet danach, den Schubhebel 23 in der ersten Verstellrichtung 68 zu verschieben. Der Schubhebel 23 weist an seinem im Bereich der Drucktasten 24 und 25 liegenden Ende einen quer zur ersten Verstellrichtung 68 verlaufenden Fortsatz 71 auf, der zum Zusammenwirken mit einem von der Drucktaste 25 entgegen der ersten Verstellrichtung 68 des Schubhebels 23 abstehenden ersten Ansatz 72 vorgesehen ist. Wie aus den Figuren 1 und 2 hervorgeht, stützt sich der Fortsatz 71 bei in ihrer Ausschaltlage befindlicher Drucktaste 25 durch die Kraft der Verstellfeder 66 am ersten Ansatz 72 der Drucktaste 25 ab, wodurch die Ruhelage des Schubhebels 23 festgelegt ist und eine Verstellung des Schubhebels in der ersten Verstellrichtung 68 durch die Kraft der Verstellfeder 66 unterbunden ist. Beim Verstellen der Drucktaste 25 in ihre Einschaltlage, wie dies in Fig. 2 mit punktierten Linien dargestellt ist, wird der erste Ansatz 72 derselben mitverstellt und dabei ist der Fortsatz 71 des Schubhebels 23 zur Verstellung desselben durch die Kraft der Verstellfeder 66 in der ersten Verstellrichtung 68 von seiner Ruhelage in seine Zwischenlage freigegeben. Der erste Ansatz 72 der Drucktaste 25 bildet somit eine mit dem Schubhebel 23 zusammenwirkende Freigabeeinrichtung für denselben, die beim Verstellen der Drucktaste 25 in ihre Einschaltlage den Schubhebel zur Verstellung durch die Kraft der an demselben angreifenden Verstellfeder 66 in der ersten Verstellrichtung 68 von seiner Ruhelage in seine Zwischenlage freigibt. Durch die Ausbildung der Freigabeeinrichtung für den Schubhebel 23 als Ansatz der Drucktaste 25 ist eine besonders einfache und sichere Funktionsweise erreicht.

Mit dem Schubhebel 23 wirken zwei Steuerteile 73 und 74 zusammen, die je zwischen einer Freigabelage und einer Blockierlage verstellbar sind und je nach ihrer Lage das Einschalten der Betriebsart « Aufnahme » freigeben oder blockieren. Der erste Steuerteil 73 ist auf nicht näher dargestellte Weise um eine Achse 75 im Gerät schwenkbar gelagert und weist einen Fühlstift 76 auf, mit dem die Anwesenheit eines abbrechbaren Lappens 5 einer in das Gerät eingesetzten Magnetbandkassette 2 auf mechanische Weise abtastbar ist, wie dies aus Fig. 3 ersichtlich ist. Beim Einsetzen einer Kassette mit vorhandenem Lappen 5, wenn also eine Löschung der gespeicherten Informationssignale und eine Neuaufzeichnung von Informationssignalen durch Einschalten der Betriebsart « Aufnahme » erlaubt ist, wird der Steuerteil 73 über den Fühlstift 76 vom Lappen 5 entgegen der Kraft einer an ihm angreifenden Feder 77 in seine in Fig. 3 mit punktierten Linien dargestellte Freigabelage verschwenkt und in dieser festgehalten. Beim Einsetzen einer Kassette mit abgebrochenem Lappen 5, wenn also keine Löschung der gespeicherten Informationssignale und keine Neuaufzeichnung von Informationssignalen durch Einschalten der Betriebsart « Aufnahme » erlaubt ist, bleibt der Steuerteil 73 unverstellt und wird von der Feder 77 in seiner durch einen Anschlag 78 festgelegten Blockierlage festgehalten.

Der zweite Steuerteil 74, der nur teilweise dargestellt ist, steht mit der Umspulantriebseinrichtung in Wirkverbindung, die in Abhängigkeit von ihrer Funktion die Verstellung des zweiten Steuerteiles 74 in Richtung des Pfeiles 79 zwischen einer Freigabelage und einer Blockierlage steuert. Wenn die Umspulantriebseinrichtung zur Durchführung eines Umspulvorganges des Magnetbandes mit einem der beiden Wickeldorne 7 bzw. 8 in Antriebsverbindung steht, wobei dann keine Löschung von auf dem Magnetband gespeicherten Informationssignalen erfolgen darf, dann steuert sie den zweiten Steuerteil 74 in seine in Fig. 1 und mit strichpunktierten Linien in Fig. 4 dargestellte Blockierlage. Wenn die Umspulantriebseinrichtung mit keinem der beiden Wickeldorne in Antriebsverbindung steht, dann steuert sie den zweiten Steuerteil 74 in seine in Fig. 4 mit strichlierten Linien dargestellte Freigabelage.

Der erste Steuerteil 73 weist zum Zusammenwirken mit dem Schubhebel 23 an einem L-förmigen Arm 80 desselben einen Blockieransatz 81 auf, der mit dem freien Ende 82 des Schubhebels 23 zusammenwirkt. Der zweite Steuerteil 74 weist zum Zusammenwirken mit dem Schubhebel 23 einen Blockierstift 83 auf, der mit einem vom Schubhebel seitlich abstehenden Lappen 84 zusammenwirkt. Wenn sich die beiden Steuerteile 73 und 74 je in ihrer Blockierlage befinden, wie dies in Fig. 1 dargestellt ist, dann blockiert jeder Steuerteil 73 bzw. 74 die Verstellung des Schubhebels 23 durch die Kraft der Verstellfeder 66 in der ersten Verstellrichtung 68 von seiner in Fig. 1 dargestellten Ruhelage in seine Zwischenlage. Der erste Steuerteil 73 blockiert diese Verstellung mit dem Blockieransatz 81, der sich bei in seiner Blockierlage befindlichem Steuerteil im Verstellweg des freien Endes 82 des Schubhebels 23 befindet, und der zweite Steuerteil 74 blockiert diese Verstellung mit dem Blockierstift 83 der sich bei in seiner Blockierlage befindlichem Steuerteil im Verstellweg des Lappens 84 des Schubhebels befindet. Es ist klar, dass diese Blockierung der Verstellung des Schubhebels 23 in der ersten Verstellrichtung 68 auch dann erfolgt, wenn nur einer der beiden Steuerteile 73 bzw. 74 seine Blockierlage einnimmt, wobei sich dann der andere Steuerteil in seiner Freigabelage befindet.

Wenn hingegen beide Steuerteile 73 und 74 ihre Freigabelage einnehmen, dass ist die Verstellung des Schubhebels 23 in seine Zwischenlage durch die Kraft der Verstellfeder 66 freigegeben. Da beide Steuerteile 73 und 74 unmittelbar mit dem Schubhebel 23 zusammenwirken, ist die Blockierung des Schubhebels bei in ihrer Blockierlage befindlichen Steuerteilen stets mit Sicherheit gewährleistet, so dass eine ungewollte Verstellung des Schubhebels in seine Betriebslage sicher vermieden ist. Jeder der beiden Steuerteile wirkt hierbei nur mit dem Schubhebel zusammen und erfüllt keine weiteren zusätzlichen Funktionen, was hinsichtlich einer einfachen und sicheren Funktionsweise vorteilhaft ist. Bei in seiner Blockierlage befindlichem Steuerteil 73 bzw. 74 wirkt auf denselben lediglich die Kraft der Verstellfeder 66 ein, so dass jeder der beiden Steuerteile nur einer geringen Belastung in seiner Blockierlage ausgesetzt ist, was im Hinblick auf einen geringen Verschleiss und eine lange Lebensdauer vorteilhaft ist.

Bei von mindestens einem der beiden Steuerteile 73 bzw. 74 in seiner Ruhelage blockiertem Schubhebel 23 befindet sich der Betätigungskerbe 61 versehenen freien Endes des Betätigungsschiebers 56 des Servomechanismus 35. Bei einer Verstellung des Betätigungsschiebers 56 von seiner in Fig. 1 mit vollen Linien dargestellten Ruhelage in seine in Fig. 1 mit punktierten Linien dargestellte Betriebslage bleibt daher in diesem Fall der Servomechanismus 35 mit seinem Betätigungsschieber 56 zur Unterbindung der Verstellbewegungsübertragung auf den Schubhebel 23 ausser Eingriff mit demselben. Es ist somit eine Verstellbewegungsübertragung mit dem Servomechanismus 35 auf den Schubhebel 23 zur Verstellung desselben in seine Betriebslage unterbunde, wenn sich mindestens einer der beiden Steuerteile in seiner Blockierlage befindet. Bei von den beiden Steuerteilen 73 und 74 freigegebenem und in seine in Fig. 4 mit punktierten Linien dargestellte Zwischenlage verstelltem Schubhebel befindet sich der Betätigungsansatz 62 des Schubhebels 23 im Verstellweg des mit der Betätigungskerbe 61 versehenen freien Endes des Betätigungsschiebers 56 des Servomechanismus. Bei einer Verstellung des Betätigungsschiebers 56 von seiner in Fig. 4 mit punktierten Linien dargestellten Ruhelage in seine in Fig. 4 mit vollen Linien dargestellte Betriebslage ist daher in diesem Fall der Servomechanismus 35 mit seinem Betätigungsschieber 56 zur Verstellbewegungsübertragung auf den Schubhebel 23 mit demselben zu seiner Verstellung in der zweiten Verstellrichtung 69 von seiner in Fig. 4 mit punktierten Linien dargestellten Zwischenlage in seine in Fig. 4 mit vollen Linien dargestellte Betriebslage bringbar. Dabei tritt das schneidenförmige Ende des Betätigungsansatzes 62 in die Betätigungskerbe 61 ein und wird der Schubhebel 23 um den ersten Führungsstift 64 in der zweiten Verstellrichtung 69 verschwenkt.

Der Schubhebel 23 weist an seinem im Bereich der Tasten 24 und 25 liegenden Ende einen seitlich abstehenden Lappen 85 auf, der als Verriegelungsteil zum Festhalten der Drucktaste 25 in ihrer Einschaltlage vorgesehen ist. Korrespondierend zur Verstellung des Schubhebels von dessen in Fig. 1 dargestellter Ruhelage in dessen in Fig. 4 mit vollen Linien dargestellte Betriebslage ist der mit ihm einstückig ausgebildete und somit materialschlüssig gekoppelte Verriegelungslappen 85 von einer in Fig. 1 dargestellten Freigabelage in eine in Fig. 4 mit vollen Linien dargestellte Verriegelungslage verstellbar. Wenn die Verstellung des Schubhebels 23 in seine Betriebslage durch mindestens einen in seiner Blockierlage befindlichem Steuerteil 73 bzw. 74 verhindert ist, dann ist durch diesen in seiner Blockierlage befindlichem Steuerteil auch eine Verstellung des Verriegelungslappens 85 in seine Verriegelungslage unterbunden. Ist hingegen der Schubhebel 23 zur Verstellung in seine Betriebslage freigegeben, dann ist auch der Verriegelungslappen 85 zur Verstellung in seine Verriegelungslage freigegeben, wobei der Schubhebel 23 bei der Verstellung in seine Betriebslage die Verstellung des Verriegelungslappens 85 in seine Verriegelungslage steuert, in der er die Drucktaste 25 in ihrer Einschaltlage entgegen der Kraft der Rückstellfeder 26 festhält, wenn die Drucktaste 25 zuvor in ihre Einschaltlage verstellt wurde.

Zum Zusammenwirken mit dem Verriegelungslappen 85 des Schubhebels 23 weist die Drucktaste 25 einen im wesentlichen entgegen der zweiten Verstellrichtung 69 des Schubhebels von derselben abstehenden zweiten Ansatz 86 auf, den der als Verriegelungsteil vorgesehene Verriegelungslappen 85 des Schubhebels bei in ihre Einschaltlage verstellter Drucktaste 25, die in Fig. 2 mit punktierten Linien dargestellt ist, und bei in seine Betriebslage verstelltem Schubhebel zum Festhalten der Drucktaste 25 in ihrer Einschaltlage hintergreift, wie dies aus Fig. 4 ersichtlich ist. Da der Verriegelungslappen 85 mit dem Schubhebel 23 einstückig gekoppelt ist, nimmt der Verriegelungslappen nur dann seine Verriegelungslage ein, wenn sich der Schubhebel tatsächlich in seiner Betriebslage befindet, also die vom Schubhebel einzuschaltende Betriebsart « Aufnahme » auch tatsächlich im Gerät eingeschaltet ist, so dass der Verriegelungslappen nur bei tatsächlich in seiner Betriebslage befindlichem Schubhebel die Drucktaste in ihrer Einschaltlage festhält. Wenn die Drucktaste 25 nach ihrer Betätigung in ihrer Einschaltlage festgehalten wird, dann stellt dies für den Benützer des Berätes eine Signalisierung dar, dass im Gerät mit Sicherheit die Betriebsart « Aufnahme » eingeschaltet ist. Dadurch, dass der Verriegelungslappen und der Schubhebel einstückig ausgebildet sind, ist zusätzlich eine besonders einfache, stabile und betriebssichere Ausbildung erreicht.

Im folgenden ist kurz die Funktionsweise des Gerätes beim Einschalten der Betriebsart « Aufnahme » beschrieben. Zum Einschalten der Betriebsart « Aufnahme » werden — wie bereits erwähnt — die beiden Drucktasten 24 und 25 vom Benützer des Gerätes betätigt und dabei von ihrer Ausschaltlage in ihre Einschaltlage verstellt, in welcher die Drucktaste 24 von der Rastschiene 34 sofort rastend festgehalten wird. Von der Drucktaste 24 wird über die Betätigungsverbindung 50 der Arretierhebel 44 aus seiner in Fig. 1 mit vollen Linien dargestellten ersten Arretierlage in seine mit punktierten Linien in Fig. 1 und auch in Fig. 4 dargestellte zweite Arretierlage verstellt. Dabei kommt das abgewinkelte Ende 48 des Arretierhebels 44 ausser Wirkverbindung vom ersten Arretieranschlag 41, so dass die Servoscheibe 37 von der Schenkelfeder 54 über den Stift 53 in Drehung versetzt wird. Hierdurch gibt der Schaltnocken 51 den Schalter 52 frei, so dass dieser geschlossen und dadurch die Speisespannung V an den Motor 11 angeschaltet wird, wodurch der Motor über die Antriebsverbindung 10 die Antriebswelle 9 und folglich auch das erste Zahnritzel 19 und das zweite Zahnritzel 40 antreibt. Durch die Kraft der Schenkelfeder 54 wird die Servoscheibe 37 mit ihrem langen Verzahnungsabschnitt 38 mit dem nunmehr bereits angetriebenen zweiten Zahnritzel 40 in Eingriff gebracht, so dass die Servoscheibe 37 im folgenden über das zweite Zahnritzel 40 angetrieben wird, wobei diese in ihre in Fig. 1 mit punktierten Linien und in Fig. 4 mit vollen Linien dargestellte Betriebslage verdreht wird. Bei dieser Verdrehung wird von der Begrenzungswand 55 der Vertiefung in der oberen Seitenfläche der Servoscheibe 37 der Stift 57 am Betätigungsschieber 56 mitgenommen, wodurch der Betätigungsschieber 56 entgegen der Kraft der an ihm angreifenden Feder 58 in Richtung des Pfeiles 16 verschoben wird. Dabei wird über den Betätigungsstift 59 und die Betätigungsverbindung 60 die Trägerplatte 17 in ihre Betriebslage verschoben, in der die Magnetkopfe 14 und 15 mit dem Magnetband in Abtastverbindung stehen, die Andruckrolle 13 das Magnetband an die nunmehr bereits angetriebene Antriebswelle 9 andrückt und das Zwischenzahnrad 18 die Antriebsverbindung vom ersten Zahnritzel 19 zu dem zum Wickeldorn 8 koaxialen Zahnrad 20 herstellt.

Durch das Betätigen der Drucktaste 25 wird der erste Ansatz 72 derselben mitverstellt, wobei der Fortsatz 71 des Schubhebels 23 zur Verstellung desselben durch die Kraft der Verstellfeder 66 freigegeben wird. Wenn sich nun aber zumindest einer der beiden Steuerteile 73 bzw. 74 in seiner Blockierlage befindet, wie dies in Fig. 1 dargestellt ist, dann ist die Verstellung des Schubhebels 23 von seiner Ruhelage in seine Zwischenlage blockiert und der Schubhebel 23 bleibt in seiner Ruhelage festgehalten. In diesem Fall bleibt dann das mit der Betätigungskerbe 61 versehene Ende des vom Servomechanismus 35 verschobenen Betätigungsschiebers 56 ausser Eingriff vom Betätigungsansatz 62 des Schubhebels 23, so dass der Schubhebel in seiner Ruhelage verbleibt und daher auch der Aufnahme/Wiedergabe-Umschalter 21 nicht in seine Arbeitslage zum Einschalten der Aufnahmefunktion umbeschaltet wird. In diesem Fall ist also dann vom Servomechanismus 35 nur die Trägerplatte 17 in ihre Betriebslage verschoben, was zur Folge hat, dass im Gerät die Betriebsart « Wiedergabe » eingeschaltet ist. In dieser Betriebsart erfolgt die Wiedergabe der auf dem Magnetband einer in das Gerät eingesetzten Magnetbandkassette gespeicherten Informationssignale, so dass der Benützer des Gerätes trotz seiner Absicht, die Betriebsart « Aufnahme » einzuschalten, durch die Wiedergabe der Informationssignale eine Warninformation erhält, dass die von ihm beabsichtigte Betriebsart « Aufnahme » im Gerät nicht eingeschaltet, sondern die Betriebsart « Wiedergabe » eingeschaltet ist. Wenn auf der in das Gerät eingesetzten Magnetbandkassette keine Informationssignale gespeichert sind, ist die vorstehend erwähnte Warninformation nicht möglich, jedoch erhält der Benützer dann eine andere Warninformation, und zwar dann, wenn er die Drucktaste 25 loslässt. Diese kehrt nämlich dann, wenn im Gerät die Betriebsart « Aufnahme » nicht tatsächlich eingeschaltet ist, durch die Kraft der an ihr angreifenden Rückstellfeder nach ihrem Loslassen in ihre Ausschaltlage zurück, was für den Benützer des Gerätes eine Warninformation dafür darstellt, dass im Gerät die von ihm beabsichtigte Betriebsart « Aufnahme » nicht eingeschaltet ist.

Wenn hingegen die beiden Steuerteile 73 und 74 je ihre Freigabelage einnehmen, wie dies in Fig. 4 dargestellt ist, dann ist nach der Freigabe der Verstellung des Schubhebels 23 durch die Drucktaste 25 die Verstellung des Schubhebels in seine Zwischenlage auch von den beiden Steuerteilen freigegeben. Die Verstellfeder 66 zieht dann den Schubhebel 23 in seine Zwischenlage, bevor der Servomechanismus 35 seinen Betätigungsschieber 56 aus seiner Ruhelage verstellt, was durch den Verlauf der Begrenzungswand 55 der Vertiefung in der Servoscheibe erreicht ist. Diese Zwischenlage ist in Fig. 4 mit punktierten Linien dargestellt, in der die Servoscheibe in einer gegenüber ihrer Ruhelage um etwa dreissig Winkelgrade im Uhrzeigersinn verdrehten Lage sich befindet, in der sie noch keine Verstellung des Betätigungsschiebers bewirkt. Bei der weiteren Verdrehung der Servoscheibe und der dadurch bewirkten Verschiebung des Betätigungsschiebers 56 entgegen der Kraft der Fer 58 in Richtung des Pfeiles 16 tritt dann die Betätigungskerbe 61 mit dem Betätigungsansatz 62 in Wirkverbindung, wobei der Schubhebel 23 um den Führungsstift 64 in der zweiten Verstellrichtung 69 in seine Betriebslage verschwenkt wird. Bei dieser Schwenkbewegung verstellt der Schubhebel 23 den Schaltstössel des Aufnahme/Wiedergabe-Umschalters 21 entgegen der Kraft der Rückstellfeder 22 desselben, wodurch der Aufnahme/Wiedergabe-Umschalter 21 in seine Arbeitslage umgeschaltet wird, in der er die für die Betriebsart « Aufnahme » erforderlichen Schaltvorgänge bewirkt. Bei dieser Verstellung des Schubhebels in seine Betriebslage wird der mit demselben einstückig ausgebildete Verriegelungslappen 85 in seine Verriegelungslage verstellt, in der er, wie Fig. 4 zeigt, den zweiten Ansatz 86 der Drucktaste 25 hintergreift und damit die Drucktaste in ihrer Einschaltlage festhält. Wenn nun der Benützer des Gerätes die Drucktaste 25 loslässt, dann bleibt auch die Drucktaste 25 in ihrer Einschaltlage festgehalten, wodurch dem Benützer des Gerätes signalisiert wird, daxs die Betriebsart « Aufnahme » im Gerät eingeshaltet ist. Diese Signalisierung erfolgt aber nur dann, wenn der Schubhebel tatsächlich in seine Betriebslage verstellt ist, wenn also mit Sicherheit die Betriebsart « Aufnahme » tatsächlich im Gerät eingeschaltet ist.

Zu erwähnen ist noch, dass für den Fall, dass der Benützer des Gerätes die Drucktaste 25 nach ihrer Betätigung loslässt, bevor der Schubhebel 23 von dem Servomechanismus 35 in seine Betriebslage verstellt wurde, der Schubhebel über seinen Fortsatz 71 vom ersten Ansatz 72 der durch die Kraft der an ihr angreifenden Rückstellfeder 26 in ihre Ausschaltlage zurückkehrenden Drucktaste 25 über dessen gegenüber dem Schubhebel geneigt verlaufende Begrenzungsfläche aus seiner Zwischenlage entgegen der Kraft der Verstellfeder 66 zurückgezogen wird, so dass auch dann, da die Betriebsart « Aufnahme » nicht eingeschaltet wurde, kein Festhalten der Drucktaste 25 mit dem Verriegelungslappen 85 in ihrer Einschaltlage erfolgt. Ferner ist zu erwähnen, dass für den Fall, dass bei im Gerät eingeschalteter Betriebsart « Aufnahme » und daher in seiner Betriebslage befindlichem Schubhebel 23 der von der Umspulantriebseinrichtung gesteuerte Steuerteil 74 von seiner in Fig. 4 mit strichlierten Linien dargestellten Freigabelage in seine in Fig. 4 mit strichpunktierten Linien dargestellte Blockierlage verstellt wird, der Schubhebel 23 vom Steuerteil 74 entgegen der Kraft der Verstellfeder 66 verstellt wird, wobei dann der Betätigungsansatz 62 aus der Betätigungskerbe 61 gedrängt wird und der Schubhebel 23 in seine Ruhelage zurückverstellt wird, wobei dann der

10

Verriegelungslappen 85 den zweiten Ansatz 86 der Drucktaste 25 freigibt und die Drucktaste 25 in ihre Ausschaltlage zurückkehrt und das Gerät, wie bereits erwähnt, automatisch von der Betriebsart « Aufnahme » in die Betriebsart « Wiedergabe » umgeschaltet wird.

Zum Ausschalten der Betriebsart « Aufnahme » wird beispielsweise vom Benützer des Gerätes die Taste zum Einschalten der Betriebsart « STOP » betätigt, wodurch die Rastschiene 34 so verstellt wird, dass die Rastnase 33 den Rastansatz 32 freigibt, wonach die Drucktaste 24 von der Rückstellfeder 26 in ihre Ausschaltlage rückverstellt wird. Dabei gibt die Drucktaste 24 über die Betätigungsverbindung 50 den Arretierhebel 44 zur Verstellung durch die Kraft der Feder 46 in seine erste Arretierlage frei, in der sein abgewinkeltes Ende 48 den zweiten Arretieranschlag 42 freigibt und im Verstellweg des ersten Arretieranschlages 41 der Servoscheibe 37 liegt. Nach der Freigabe des zweiten Arretieranschlages 42 wird die Servoscheibe 37 von der Schenkelfeder 54 über den Stift 53 in Drehung versetzt, wobei der kurze Verzahnungsabschnitt 39 mit dem zweiten Zahnritzel 40 zum Antreiben der Servoscheibe in Eingriff tritt. Hierdurch wird die Servoscheibe 37 in ihre durch Zusammenwirken des ersten Arretieranschlages 41 mit dem abgewinkelten Ende 48 des Arretierhebels 44 festgelegte Ruhelage verdreht, in die sie, nachdem der kurze Verzahnungsabschnitt 39 ausser Eingriff vom zweiten Zahnritzel gekommen ist, von der Schenkelfeder 54 verstellt wird und in der der Schaltnocken 51 den Schalter 52 öffnet, so dass der Motor 11 abgeschaltet und damit der Antrieb der Antriebswelle 9 und der beiden auf ihr angebrachten Zahnritzel 19 und 40 beendet wird. Bei der Verstellung der Servoscheibe 37 in ihre Ruhelage wird der Betätigungsschieber 56 durch die Kraft der an ihm angreifenden Feder 58 in seine Ruhelage verschoben. Hierbei gibt der Betätigungsstift 59 über die Betätigungsverbindung 60 die Verstellung der Trägerplatte 17 entgegen der Richtung des Pfeiles 16 in ihre Ruhelage frei, so dass die Trägerplatte 17 durch die Kraft der an ihr angreifenden Rückstellfeder in ihre Ruhelage zurückkehrt. Ferner gibt die Betätigungskerbe 61 den Betätigungsansatz 62 frei, so dass der Schubhebel 23 zuerst im wesentlichen durch die Kraft der Rückstellfeder 22 des Aufnahme/Wiedergabe-Umschalters 21 in seine Zwischenlage verschwenkt wird, in der dann der Verriegelungslappen 85 aus dem Verstellweg des zweiten Ansatzes 86 der Drucktaste 25 verstellt ist. Hierauf kehrt die Drucktaste 25 durch die Kraft der Rückstellfeder 26 in ihre Ausschaltlage zurück, wobei sie über die gegenüber dem Schubhebel geneigt verlaufende Begrenzungsfläche ihres ersten Ansatzes 72 und den Fortsatz 71 des Schubhebels 23 auch letzteren in seine Ruhelage zurückbringt. Durch die Kraft der vom Schubhebel freigegebenen Rückstellfeder 22 des Aufnahme/Wiedergabe-Umschalters 21 wird selbstverständlich der Umschalter 21 in seine Ruhelage zurückgeschaltet. Damit sind sämtliche Geräteteile wieder in ihre Ruhelage gebracht, so dass die zuvor eingeschaltete gewesene Betriebsart « Aufnahme » wieder ausgeschaltet ist.

Im vorstehend beschriebenen Ausführungsbeispiel wird die Betriebsart « Aufnahme » durch Betätigen von zwei Drucktasten im Gerät eingeschaltet. Selbstverständlich ist es auch möglich, die Betriebsart « Aufnahme » nur mit einer Drucktaste einzuschalten, wobei diese Drucktaste dann über eine Betätigungsverbindung auch den Servomechanismus in Betrieb setzt. Die Betätigung des Aufnahme/Wiedergabe-Umschalters muss nicht direkt vom Schubhebel her erfolgen, sonderen kann vom Schubhebel auch über einen Zwischenhebel zur Anpassung von Bewegungshüben durchgeführt werden. Selbstverständlich kann auch eine andere Verstelleinrichtung zur Verstellung der Trägerplatte und des Schubhebels als der vorstehend beschriebene Servomechanismus zur Anwendung kommen.

Das in den Figuren 5 bis 8 dargestellte Kassettenmagnetbandgerät 87 ist zum Zusammenwirken mit einer in den Figuren 7 und 8 nur schematisch mit strichpunktierten Linien angedeuteten Magnetbandkassette 88 vorgesehen, die zwei nebeneinanderliegende Magnetbandwickel enthält und in der das Magnetband längs einer langen Schmalseite 89 von einem Magnetbandwickel zum anderen geführt ist. Zur Aufnahme einer solchen Magnetbandkassette 88 weist das Gerät eine schachtförmige Kassettenaufnahme 90 auf.

Im Gerät 87 ist eine Betriebsart « Wiedergabe » einschaltbar, die zum Wiedergeben von auf dem in einer Kassette 88 untergebrachten Magnetband gespeicherten Diktatsignalen vorgesehen ist, wobei die wiedergegebenen Diktatsignalen von einer Schreibkraft mit einer Schreibmaschine auf Papier gebracht werden können. Nach erfolgter Wiedergabe der Diktatsignale sind dieselben in einer Betriebsart « Schnell-Löschen » löschbar. Das Magnetband ist bei vorliegendem Gerät sowohl in der Betriebsart « Wiedergabe » als auch in der Betriebsart « Schnell-Löschen » von zwei Wickeldornen 91 und 92 antreibbar, wobei in der Betriebsart « Wiedergabe » der Wickeldorn 91 mit einer vorgegebenen Geschwindigkeit angetrieben wird und in der Betriebsart « Schnell-Löschen » der Wickeldorn 92 mit einer gegenüber vorgenannter Geschwindigkeit höheren Geschwindigkeit angetrieben wird. Die Antriebseinrichtungen für die beiden Wickeldorne sind der Einfachheit und, da sie für die Erfindung nicht wesentlich sind, in den Figuren 5 bis 8 nicht dargestellt.

Zum Wiedergeben der Diktatsignale in der Betriebsart « Wiedergabe » weist das Gerät 87 einen Wiedergabe-Magnetkopf 93 auf. Zum Löschen der Diktatsignale in der Betriebsart « Schnell-Löschen » weist das Gerät einen Lösch-Magnetkopf 94 auf. Dei beiden Magnetköpfe 93 und 94 sind je auf einer auf nicht näher dargestellte Weise in Richtung eines Pfeiles 95 verschiebbar geführten Trägerplatte 96 angebracht, die zwischen einer in den Figuren 5 und 6 dargestellten Ruhelage und einer in den Figuren 7 und 8 dargestellten Betriebslage verschiebbar ist. Die Betriebslage der Trägerplatte 96 ist durch zwei vom Boden der Kassettenaufnahme abstehende Positionieranschläge 97 und 98 festgelegt, an denen sich die Trägerplatte 96 mit ihrer kassettenseitigen Stirnseite 99 abstützt.

Zum Einschalten der Betriebsart « Wiedergabe » weist das Gerät 87 eine nicht dargestellte, zwischen einer Ausschaltlage und einer Einschaltlage verstellbare, in ihrer Einschaltlage mit einer löschbaren Rasteinrichtung rastend festhaltbare Taste auf, bei deren Betätigung die Trägerplatte 96 in Richtung des Pfeiles 95 in ihre Betriebslage verschoben un zugleich für den Antrieb des Wickeldornes 91 mit der betreffenden Antriebseinrichtung gesorgt wird. Zum Einschalten der Betriebsart « Schnell-Löschen » weist das Gerät eine in Richtung des Pfeiles 95 auf nicht näher dargestellte Weise verschiebbar geführte Schiebetaste 100 auf, die zwischen einer in den Figuren 5 und 6 dargestellten Ausschaltlage und einer in den Figure 7 und 8 dargestellten Einschaltlage verstellbar ist. Die Schiebetaste 100 wirkt mit dem freien Ende ihres Tastenschaftes mit einem ebenfalls in Richtung des Pfeiles 95 verschiebbar geführten Schieber 101 zusammen, der an seinem von der Schiebetaste 100 abgewandten Ende einen ihn durchsetzenden Stift 102 trägt, an dessen unterem Ende eine entgegen der Richtung des Pfeiles 95 ziehenden, als Rückstellfeder für die Schiebetaste 100 vorgesehene Zugfeder 103 angreift. Bei nicht betätigter Schiebetaste 100 hält die Zugfeder 103 über den Stift 102 und den Schieber 101 einen seitlich abstehenden Ansatz 104 des Tastenschaftes der Schiebetaste 100 an einen Anschlag 105 im Gerät angelegt, wodurch die Ausschaltlage der Schiebetaste 100 und die Ruhelage des Schiebers 101 festgelegt ist.

Am oberen Ende des den Schieber 101 durchsetzenden Stiftes 102 greift eine weitere Zugfeder 106 an, die mit ihrem anderen Ende an einem in der Trägerplatte 96 eingesetzten Stift 107 eingehängt ist. Die Zugfeder 106 verspannt den Schieber 101 und die Trägerplatte 96 miteinander, wobei sich bei in ihrer Ausschaltlage befindlicher Schiebetaste 100 der Stift 102 mit seinem oberen freien Ende an einem in die Trägerplatte 96 eingesetzten Anschlag 108 abstützt, wodurch die Ruhelage der Trägerplatte 96 festgelegt ist. Beim Verschieben des Schiebers 101 durch Betätigen der Schiebetaste 100, wobei diese von ihrer Ausschaltlage in ihre Einschaltlage verstellt wird, überträgt die Zugfeder 106 die Verstellkraft auf die Trägerplatte 97. Die Zugfeder 106 stellt einen Teil einer Verstelleinrichtung zur Verstellbewegungsübertragung auf die Trägerplatte dar.

Zum Festhalten der Schiebetaste 100 in ihrer Einschaltlage weist das Gerät einen zwischen einer in Figur 5 dargestellten Freigabelage und einer in Figur 7 mit vollen Linien dargestellten Verriegelungslage verstellbaren Verriegelungsteil 109 auf, der als L-förmiger Hebel ausgebildet ist und dessen freies Ende 110 mit einem seitlichen Ansatz 111 des Tastenschaftes der Schiebetaste 100 zusammenwirkt, wobei das freie Ende 110 des Verriegelungshebels 109 den Ansatz 111 bei in ihrer Einschaltlage befindlicher Schiebetaste 100 zum Festhalten derselben entgegen der Kraft der Zugfeder 103 hintergreift.

Der Verriegelungshebel 109 ist um eine Welle 112 schwenkbar gelagert und mit einem ebenfalls um die Welle 112 schwenkbar gelagerten zweiarmigen Kopplungshebel 113 durch eine an den beiden Hebeln angreifende Zugfeder 114 verspannt, wobei sich der Verriegelungshebel 109 an einem abgewinkelten Lappen 115 des Kopplungshebels 113 abstützt. An dem vom Verriegelungshebel 109 abgewandten Ende des Kopplungshebels 113 trägt derselbe einen Kopplungsstift 116, der mit einer durch eine Begrenzungsfläche eines Durchbruches in der Trägerplatte 96 gebildeten Kopplungskulisse 117 zusammenwirkt, gegen die der Kopplungsstift 116 durch die Kraft einer an dem Kopplungshebel 113 angreifenden Feder 118 angelegt gehalten ist. Auf diese Weise ist der Verriegelungshebel 109 mit der Trägerplatte 96 kraftschlüssig gekoppelt, wobei über die Kopplungskulisse 117 die Trägerplatte 96 bei der Verstellung in ihre Betriebslage die Verstellung des Verriegelungshebels 109 in seine Verriegelungslage steuert, wie dies nachfolgend noch beschrieben ist.

Das Gerät 87 weist einen Steuerteil 119 auf, der senkrecht zum Boden der Kassettenaufnahme 90 verschiebbar geführt und zwischen einer in den Figuren 5 und 6 dargestellten Blockierlage und einer in den Figure 7 und 8 dargestellten Freigabelage verstellbar ist. Der Steuerteil 119 dient in vorliegendem Fall zum mechanism Abtasten der Anwesenheit einer Magnetbandkassette 88 in der Kassettenaufnahme 90, wofür der Steuerteil 119 einen durch eine Öffnung im Boden der Kassettenaufnahme hindurchragenden Fühllappen 120 aufweist. Wenn keine Magnetbandkassette in die Kassettenaufnahme eingesetzt ist, dann ragt der Fühllappen 120 in den Aufnahmeraum der Kassettenaufnahme 90 hinein, wobei dann der Steuerteil 119 seine Blockierlage einnimmt, in der er das Einschalten der Betriebsart « Schnell-Löschen » blockiert. Die Blockierlage des Steuerteiles 119 ist dadurch festgelegt, dass ein mit dem Steuerteil 119 verbundener Anschlag 121 unter der Kraft einer auf den Steuerteil 119 aufgesetzten Druckfeder 122 sich an einer Führung 123 für den Steuerteil 119 abstützt. Ist hingegen eine Magnetbandkassette 88 in die Kassettenaufnahme 90 eingesetzt, dann hält dieselbe den Steuerteil 119 in seine Freigabelage verstellt, in der er das Einschalten der Betriebsart « Schnell-Löschen » freigibt.

Der Steuerteil 119 weist einen Blockierlappen 124 auf, der mit der Trägerplatte 96 über deren Stirnseite 99 zusammenwirkt. Bei in seiner Blockierlage befindlichem Steuerteil 119 befindet sich der Blockierlappen 124 im Verstellweg der Trägerplatte 96 in Richtung des Pfeiles 95, so dass der unmittelbar mit der Trägerplatte zusammenwirkende Steuerteil eine Verstellbewegungsübertragung auf die Trägerplatte 96 mit Sicherheit unterbindet. Da der Verriegelungshebel 109 mit der Trägerplatte 96 kraftschlüssig gekoppelt ist, ist dann auch eine Verstellung des Verriegelungshebels 109 in seine Verriegelungslage unterbunden. Bei von einer in die Kassettenaufnahme eingesetzten Magnetbandkassette in seine Freigabelage verstelltem Steuerteil 119 ist hingegen der Blockierlappen 124 aus dem Verstellweg der Trägerplatte 96 verschoben, so dass in diesem Fall eine Verstellbewegungsübertragung auf die Trägerplatte 96 von der durch den Schieber 101 und die Zugfeder 106 gebildeten Verstelleinrichtung für die Trägerplatte 96 möglich ist. Es wird daher bei in seiner Freigabelage befindlichem Steuerteil 119 durch Betätigen der Schiebetaste 100 die Trägerplatte 96 in ihre Betriebslage verstellt, wobei dann aufgrund der in diesem Fall kraftschlüssig ausgebildeten Kopplung zwischen der Trägerplatte 96 und dem Verriegelungshebel 109 dieser in seine Verriegelungslage verstellt wird, in der er die Schiebetaste 100 in ihrer Einschaltlage festhält. Das Festhalten der Schiebetaste 100 in ihrer Einschaltlage mit dem Verriegelungshebel 109 erfolgt somit nur dann, wenn die Trägerplatte 96 in ihre Betriebslage verstellt wird, also die Betriebsart « Schnell-Löschen » tatsächlich im Gerät eingeschaltet wird.

Im folgenden ist die Funktionsweise des Gerätes gemäss den Figuren 5 bis 8 beschrieben. Zum Einschalten der Betriebsart « Schnell-Löschen » wird vom Benützer des Gerätes die Schiebetaste 100 in Richtung des Pfeiles 95 von ihrer Ausschaltlage in ihre Einschaltlage verschoben, welche Schiebebewegung beispielsweise durch einen Anschlag im Hub begrenzt ist. Durch das Verschieben der Schiebetaste wird der Schieber 101 entgegen der Kraft der Zugfeder 103 ebenfalls in Richtung des Pfeiles 95 verschoben. Über den Stift 102 wird die Schiebebewegung des Schiebers 101 auf die Zugfeder 106 übertragen. Wenn sich der Steuerteil 119 in seiner Blockierlage befindet, weil keine Magnetbandkassette 88 vom Benützer des Gerätes in die Kassettenaufnahme 90 eingelegt wurde, dann ist die Trägerplatte 96 vom Steuerteil 119 über dessen Blockierlappen in ihrer Ruhelage blockiert, wobei dann die Zugfeder 106 zur Unterbrechung der Verstellbewegungsübertragung auf die Trägerplatte 96 gespannt wird und der Stift 102 vom Anschlag 108 abhebt. Da die Trägerplatte 96 in ihrer Ruhelage blockiert ist, bleibt auch der mit der Trägerplatte 96 über die Kopplungskulisse 117, den Kopplungsstift 116 und den Kopplungshebel 113 kraftschlüssig gekoppelte Verriegelungshebel 109 in seiner Freigabelage gehalten. Wenn der Benützer des Gerätes die Schiebetaste 100 nunmehr wieder loslässt, so kehrt dieselbe, da sie von dem in seiner Freigabelage belassenen Verriegelungshebel 109 nicht festgehalten wird, durch die Kraft der Zugfeder 103 wieder in ihre Ausschaltlage zurück, wodurch dem Benützer des Gerätes signalisiert wird, dass die von ihm gewählte Betriebsart « Schnell-Löschen » im Gerät nicht eingeschaltet wurde. Dies wäre ja auch sinnlos, da keine Kassette in das Gerät eingesetzt wurde, was durch den Steuerteil auf mechanische Weise detektiert wird.

Wenn sich der Steuerteil 119 beim Betätigen der Schiebetaste 100 in seiner Freigabelage befindet, also eine Magnetbandkassette 88 in die Kassettenaufnahme 90 vom Benützer eingesetzt wurde, dann wird die Schiebebewegung des Schiebers 102 über die Zugfeder 106 auf die Trägerplatte 96 übertragen, wodurch diese in Richtung des Pfeiles 95 in ihre Betriebslage verschoben wird, in der sich ihre Stirnseite 99 an den Positionsanschlägen 97 und 98 abstützt, wobei der Stift 102 vom Anschlag 108 abgehoben ist. In der Betriebslage der Trägerplatte 96 steht der Lösch-Magnetkopf 94 mit dem Magnetband zur Löschung von auf dem Magnetband gespeicherten Diktiersignalen in Wirkverbindung, wobei zusätzlich auf nicht dargestellte Weise ein Löschsignalgenerator an den Lösch-Magnetkopf angeschaltet und die Antriebseinrichtung zum schnellen Antreiben des Wickeldornes 92 eingeschaltet wird. Es ist somit im Gerät die Betriebsart « Schnell-Löschen » eingeschaltet. Beim Verstellen der Trägerplatte 96 in ihre Betriebslage wird der Kopplungshebel 113 entgegen der Kraft der an ihm angreifenden Feder 118 in seine in Fig. 7 dargestellte Betriebslage verschwenkt, wobei der Verriegelungshebel 109, solange die Schiebetaste 100 noch nicht ihre Einschaltlage einnimmt, sich am seitlichen Absatz 111 der Schiebetaste 100 abstützt, wie dies in Fig. 7 mit strichpunktierten Linien dargestellt ist, wobei die Zugfeder 114 gespannt wird. Wenn die Schiebetaste 100 ihre Einschaltlage erreicht, dann schnappt durch die Kraft derFeder 114 der Verriegelungshebel 109 mit seinem freien Ende 110 hinter dem Ansatz 111 der Schiebetaste ein, wodurch die Schiebetaste entgegen der Kraft der Zugfeder 103 in ihrer Einschaltlage festgehalten ist. Wenn der Benützer des Gerätes nunmehr die Schiebetaste 100 loslässt, bleibt diese in ihrer Einschaltlage festgehalten, wodurch dem Benützer signalisiert wird, dass im Gerät die vom Benützer gewünschte Betriebsart « Schnell-Löschen » eingeschaltet ist. Diese Signalisierung ergibt sich, wie vorstehend erläutert, nur dann, wenn sich die Trägerplatte in ihrer Betriebslage befindet, also im Gerät tatsächlich die Betriebsart « Schnell-Löschen » eingeschaltet ist.

Das Ausschalten der Betriebsart « Schnell-Löschen » kann mit einer hierfür vorgesehenen Schalteinrichtung des Gerätes erfolgen, die beispielsweise von einer STOP-Tase oder auch von einer automatisch das Erreichen des Endes des Magnetbandes detektierenden Abschaltvorrichtung betätigbar ist. Die Schalteinrichtung wirkt mit einem Verstellansatz 125 der Trägerplatte 96 zusammen. Bei einer Betätigung der Schalteinrichtung übt dieselbe auf den Verstellansatz 125 eine entgegen der Richtung des Pfeiles 95 gerichtete Kraft aus, wodurch die Trägerplatte 96 in ihre Ruhelage zurückverschoben wird. Dabei zieht die Fer 118 den Kopplungsstift 116 am Kopplungshebel 113 gegen die Kopplungskulisse 117, wodurch der Kopplungshebel 113 verschwenkt wird und dabei über den Lappen 115 auch der Verriegelungshebel 109 in seine Freigabelage zurückverstellt wird, Hierdurch ist die Schiebetaste 100 nicht mehr in ihrer Einschaltlage festgehalten, so dass sie von der Zugfeder 103 über den Schieber 101 in ihre Ausschaltlage gebracht wird. Damit nehmen alle Geräteteile wieder ihre Ruhelage ein, so dass die zuvor eingeschaltet gewesene Betriebsart « Schnell-Löschen » wider ausgeschaltet ist.

Bei dem in den Figuren 9, 10 und 11 teilweise dargestellten Gerät weist der als Freigabeeinrichtung vorgesehene erste Ansatz 72 der Drucktaste 25 eine gegenüber dem in den Figuren 1 bis 4 dargestellten Gerät abgeänderte Form auf. Dit mit dem Schubhebel 23 zusammenwirkende Begrenzungsfläche des ersten Ansatzes 72 weist in diesem Fall einen vom freien Ende dieses Ansatzes ausgehenden steiler geneigten ersten Abschnitt und einen an diesen anschliessenden, bis zum Tastenschaft reichenden und senkrecht zum Tastenschaft verlaufenden zweiten Abschnitt auf. Beim Betätigen der Drucktaste 25 gleitet der Fortsatz 71 des Schubhebels 23 durch die Kraft der an demselben angreifenden Verstellfeder 66 zuerst über densteiler geneigten ersten Abschnitt der Begrenzungsfläche und danach wird der Fortsatz 71 parallel zum zweiten Abschnitt der Begrenzungsfläche verschoben, so dass dann der Fortsatz 71 des Schubhebels 23, wenn dieser in seine in Fig. 11 mit punktierten Linien dargestellte Zwischenlage verstellt ist, bereits den ersten Ansatz 72 der Drucktaste 25 zum Festhalten der Drucktaste 25 in ihrer Einschaltlage hintergreift. Dieses Hintergreifen des ersten Ansatzes 72 durch den Fortsatz 71 bleibt auch bei der weiteren Verstellung des Schubhebels 23 von seiner Zwischenlage in seine in Fig. 11 mit vollen Linien dargestellte Betriebslage bestehen. Es erübrigt sich hierdurch das Vorsehen eines zweiten Ansatzes 86 an der Drucktaste 25 und eines Verriegelungslappens 85 am Schubhebel 23. In diesem Fall bildet der Fortsatz 71 des Schubhebels 23 auch den Verriegelungsteil für die Drucktaste 25, der bei der Verstellung des Schubhebels aus seiner Ruhelage in seine Betriebslage von demselben in seine Verriegelungslage gesteuert wird. Von dem Fortsatz 71 wird die Drucktaste 25 aber schon zu einem früheren Zeitpunkt als beim Ausführungsbeispiel gemäss den Figuren 1 bis 4 in ihrer Einschaltlage festgehalten, nämlich dann, wenn der Schubhebel 23 während seiner Verstellung aus seiner Ruhelage in seine Betriebslage im wesentlichen seine Zwischenlage erreicht. Dadurch, dass der durch den Fortsatz 71 gebildete Verriegelungsteil bereits bei in seine Zwischenlage verstelltem Schubhebel 23 von diesem in seine Verriegelungslage gesteuert ist, wird die Drucktaste 25 inmittelbar nach Erreichen ihrer Einschaltlage in dieser vom Fortsatz 71 festgehalten, so dass die Drucktaste 25 auch nach einer kurzen, vollständigen Betätigung bereits in ihrer Einschaltlage verriegelt wird.

Um zu verhindern, dass die Drucktaste 25 bei deren alleiniger Betätigung vom Fortsatz 71 des Schubhebels 23 verriegelt wird, was kein Einschalten der Betriebsart « Aufnahme » zur Folge hat, weil der mit der anderen Drucktaste 24 auslösbare Servomechanismus 35 dann nicht in Funktion tritt, ist bei diesem abgewandelten Gerät der Schubhebel 23 mit einem von demselben quer zur ersten Verstellrichtung 68 abstehenden, bis zur Drucktaste 24 ragenden weiteren Fortsatz 125 versehen, der mit einem von der Drucktaste 24 entgegen der ersten Verstellrichtung 68 von derselben abstehenden Steueransatz 126 zusammenwirkt, der bei in ihrer Ausschaltlage befindlicher Drucktaste 24 eine Verstellung des Schubhebels 23 in der ersten Verstellrichtung 68 blockiert und bei in ihrer Einschaltlage befindlicher Drucktaste 24 die Verstellung des Schubhebels 23 in der ersten Verstellrichtung 68 freigibt. Es bildet somit dieser Steueransatz 126 der Drucktaste 24 einen weiteren zwischen einer Freigabelage und einer Blockierlage verstellbaren Steuerteil, der die Verstellung des Schubhebels 23 und damit das Einschalten der Betriebsart « Aufnahme » nur dann freigibt, wenn auch die Drucktaste 24 betätigt wird. Auch der Steueransatz 126 wirkt unmittelbare mit dem Schubhebel 23 zusammen, so dass eine ungewollte Verstellung des Schubhebels aus seiner Ruhelage bei in seiner Blockierlage befindlichem Steueransatz 126, also bei nichtbetätigter Drucktaste 24, absolut sicher vermieden ist.

Das Festhalten der Drucktaste 25 in ihrer Einschaltlage erfolgt auch bei diesem Gerät ausschliesslich nur dann, wenn der Schubhebel 23 tatsächlich aus seiner Ruhelage in seine Betriebslage verstellt wird, was nur dann der Fall ist, wenn dies alle drei mit dem Schubhebel 23 zusammenwirkenden Steuerteile 73, 74 und 126 zulassen. Durch das frühe Festhalten der Drucktaste 25 in ihrer Einschaltlage wird dem Benützer rasch signalisiert, dass die Betriebsart « Aufnahme » im Gerät eingeschaltet wird.

Das Auslösen der Rückstellung des Schubhebels 23 in seine Ruhelage kann auch bei diesem abgewandelten Gerät durch Betätigen der STOPTaste erfolgen, wobei dann diese Tastenbetätigung eine auf nicht näher dargestellte Weise erzielte Verschiebung des Schubhebels 23 entgegen der ersten Verstellrichtung 68 aus seiner Betriebslage zur Folge hat, wodurch der Fortsatz 71 des Schubhebels 23 den ersten Ansatz 72 der Drucktaste 25 freigibt und diese in ihre Ausschaltlage zurückkehrt, wobei sei über ihren ersten Ansatz 72 und den Fortsatz 71 auch den Schubhebel 23 in seine Ruhelage ganz zurückverstellt und in dieser festhält.

Die drei vorstehend beschriebenen Ausführungsbeispiele beziehen sich auf Magnetbandkassettengeräte, bei denen das Aufzeichnen bzw. Wiedergeben von Signalen auf einem bandförmigen Aufzeichnungsträger erfolgt. Selbstverständlich ist die Erfindung auch bei anderen Aufzeichnungs- und/oder Wiedergabegeräten anwendbar, etwa bei solchen für blattförmige, manschettenförmige, scheibenförmige oder plattenförmige Aufzeichnungsträger. Bei einem Gerät für einen plattenförmigen Aufzeichnungsträger kann ein Steuerteil zum Freigeben bzw. Blockieren des Einschaltens einer Betriebsart zum Wiedergeben von gespeicherten Informationssignalen als mechanischer Abtaster zum Detektieren der Anwesenheit eines plattenförmigen Aufzeichnungsträgers im Gerät ausgebildet sein.

**Patentansprüche**

1. Aufzeichnungs- und/oder Wiedergabegerät mit mindestens einer entgegen der Kraft einer Rückstellfeder (26) von einer Ausschaltlage in eine Einschaltlage verstellbaren Taste (25) zum Einschalten einer Betriebsart im Gerät, mit mindestens einem durch Verstellen der Taste von ihrer Ausschaltlage in ihre Einschaltlage von einer Ruhelage in eine Betriebslage verstellbaren Geräteteil (23), der in seiner Betriebslage die Betriebsart einschaltet, mit einer zur gegebenenfalls unterbindbaren Verstellbewegungsübertragung auf den Geräteteil vorgesehenen Verstelleinrichtung (35), mit einem zwischen einer Freigabelage und einer Verriegelungslage verstellbaren Verriegelungsteil (85) für die Taste, der in seiner Verriegelungslage die Taste entgegen der Kraft der Rückstellfeder (26) in ihrer Einschaltlage festhält, und mit mindestens einem zwischen einer Freigabelage und einer Blockierlage verstellbaren, je nach seiner Lage das Einschalten der Betreibsart freigebenden oder blockierenden Steuerteil (73, 74), der in seiner Blockierlage die Verstellung des Verriegelungsteiles in seine Verriegelungslage und die Verstellbewegungsübertragung mit der Verstelleinrichtung auf den Geräteteil zur Verstellung desselben in seine Betriebslage unterbindet, und der mit dem Geräteteil (23) zusammenwirkt, wobei der Verriegelungsteil (85) mit dem Geräteteil gekoppelt ist, und der Geräteteil bei der Verstellung in seine Betriebslage die Verstellung des Verriegelungsteiles in seine Verriegelungslage steuert.

2. Gerät nach Anspruch 1, dadurch gekennzeichnet, dass der Geräteteil (23) in einer ersten Verstellrichtung von seiner Ruhelage in eine Zwischenlage und in einer zweiten Verstellrichtung von seiner Zwischenlage in seine Betriebslage verstellbar ist, dass eine mit dem Geräteteil zusammenwirkende Freigabeeinrichtung (72) vorgesehen ist, die beim Verstellen der Taste in ihre Einschaltlage den Geräteteil zur Verstellung durch die Kraft einer an demselben angreifenden Verstellfeder (66) in der ersten Verstellrichtung von seiner Ruhelage in seine Zwischenlage freigibt, dass die Verstellung des Geräteteiles in seine Zwischenlage durch den mit demselben zusammenwirkenden Steuerteil (73, 74) in dessen Blockierlage blockiert und in dessen Freigabelage freigegeben ist und dass bei vom Steuerteil blockiertem Geräteteil die Verstelleinrichtung (35) zur Unterbindung der Verstellbewegungsübertragung auf den Geräteteil ausser Eingriff mit demselben bleibt und bei in seine Zwischenlage verstelltem Geräteteil die Verstelleinrichtung zur Verstellebewegungsübertragung auf den Geräteteil mit demselben zu seiner Verstellung in der zweiten Verstellrichtung von seiner Zwischenlage in seine Betriebslage in Eingriff bringbar ist.

3. Gerät nach Anspruch 2, daduch gekennzeichnet, dass die Freigabeeinrichtung durch einen im wesentlichen entgegen der ersten Verstellrichtung des Geräteteiles von der Taste abstehenden ersten Ansatz (72) gebildet ist und der Geräteteil einen im wesentlichen quer zur ersten Verstellrichtung verlaufenden, zum Zusammenwirken mit dem ersten Ansatz vorgesehenen Fortsatz (71) aufweist, der sich bei in ihrer Ausschaltlage befindlicher Taste durch die Kraft der Verstellfeder (66) am ersten Ansatz abstützt, wobei beim Verstellen der Taste in ihre Einschaltlage der erste Ansatz mitverstellt .und dabei der Fortsatz des Geräteteiles zur Verstellung desselben durch die Kraft der Verstellfeder in der ersten Verstellrichtung von seiner Ruhelage in seine Zwischenlage freigegeben ist.

4. Gerät nach Anspruch 3, dadurch gekennzeichnet, dass der Verriegelungsteil durch den Fortsatz (71, fig. 9) des Geräteteiles gebildet ist, der bei in ihre Einschaltlage verstellter Taste den ersten Ansatz (72) derselben bei in seine Zwischenlage verstelltem Geräteteil zum Festhalten der Taste in ihrer Einschaltlage hintergreift.

5. Gerät nach Anspruch 2 oder 3, dadurch gekennzeichnet, dass der Verriegelungsteil durch einen Abschnitt (85) des Geräteteiles gebildet ist und dass die Taste einen im wesentlichen entgegen der zweiten Verstellrichtung des Geräteteiles von derselben abstehenden zweiten Ansatz (86) aufweist, den der als Verriegelungsteil vorgesehene Abschnitt des Geräteteiles bei in ihre Einschaltlage verstellter Taste und in seine Betriebslage verstellten Geräteteil zum Festhalten der Taste in ihrer Einschaltlage hintergreift.

**Claims**

1. A recording and/or reproducing apparatus comprising at least one button (25) which is movable from an off-position to an on-position against the force of a return spring (26) to start a mode of operation in the apparatus, at least one apparatus part (23) which is movable from a rest position to an operating position by setting the button from its off-position to its on-position and which in its operating position starts the mode of operation, an actuating device (35) for the transmission of the actuating movement to the apparatus part, which transmission can be inhibited, a latching member (85) for the button, which latching member is movable between a release position and a latching position and which in its latching position retains the button in its on-position against the force of the return spring (26), and at least one control member (73, 74) which is movable between a release position and a blocking position, in which the mode of operation can be started or inhibited respectively, and which in its blocking position inhibits the movement of the latching member to its latching position and the transmission the actuating movement to the apparatus part to bring said set part into its operating position by the actuating device, and which cooperates with the apparatus part (23), the latching member (85) being coupled to the apparatus part and the movement of the latching member into its latching position being controlled by the apparatus part as it moves to its operating position.

2. An apparatus as claimed in Claim 1, characterized in that the apparatus part (23) can be set from its rest position to an intermediate position in a first actuating direction and from its intermediate position to its operating position in a second actuating direction, and there is provided a release device (72) which cooperates with the apparatus part, which when the button is set to its on-position enables the apparatus part to be set from a rest position to its intermediate position in the first actuating direction under the influence of the force provided by an actuating spring (66) which acts thereon, which blocks the movement of the apparatus part to its intermediate position by means of the control member (73, 74) which in its blocking position cooperates with said part and enables said movement in the release position of said control member, and when the apparatus part is blocked by the control member the actuating device (35) does not cooperate with the apparatus part in order to cANcel the transmission of the actuating movement to said part and when the apparatus part is in its intermediate position can operate with the apparatus part in order to transmit the actuating movement to said part and to set said part from its intermediate position to its operating position in the second actuating direction.

3. An apparatus as claimed in Claim 2, characterized in that the release device comprises a first projection (72) which projects from the button in a direction substantially opposite to the first actuating direction and the apparatus part comprises an extension (71) which extends substantially transversely of the first actuating direction, which is adapted to cooperate with the first projection, and which in off-position of the button is urged against the first projection under the influence of the actuating spring (66), the first projection being moved when the button is set to its on-position and thereby enabling the extension of the apparatus part to be moved from its rest position to its intermediate position in the first actuating direction under the influence of the actuating spring.

4. An apparatus as claimed in Claim 3, characterized in that the latching member is constituted by the extension (71, Fig. 9) of the apparatus part, which extension in the on-position of the button engages behind the first projection (72) of said button to keep said button in its on-position when the apparatus part has been set its intermediate position.

5. An apparatus as claimed in Claim 2 or 3, characterized in that the latching member is constituted by a portion (85) of the apparatus part and the button comprises a second projection (86) which projects from said part substantially in a direction substantially opposite to the second actuating direction of the apparatus part, which second projection engages behind that portion of the apparatus part which serves as a latching member in the on-position of the button and when the apparatus part is in its operating position in order to latch the button in its on-position.

**Revendications**

1. Appareil d'enregistrement et/ou de reproduction comportant au moins une touche (25) pouvant être déplacée, à l'encontre de la sollicitation d'un ressort de rappel (26), d'une position de déclenchement dans une position d'enclenchement en vue de l'enclenchement d'un mode de fonctionnement dans l'appareil, comportant au moins une pièce mobile (23) qui est déplaçable d'une position de repos dans une position de fonctionnement par déplacement de la touche de sa position de déclenchement dans sa position d'enclenchement et qui, dans sa position de fonctionnement, enclenche le mode de fonctionnement, un dispositif de déplacement (35) prévu pour la transmission, avec interruption éventuelle, du mouvement de déplacement à la pièce mobile, un organe de verrouillage (85) pour la touche, qui est déplaçable entre une position de déverrouillage et une position de verrouillage et qui, dans sa position de verrouillage, retient la touche dans sa position d'enclenchement, à l'encontre de la sollicitation du ressort de rappel (26), et au moins un organe de commande (73, 74) déplaçable entre une position de déblocage et une position de blocage, qui débloque ou bloque l'enclenchement du mode de fonctionnement d'après sa position, qui, dans sa position de blocage, empêche le déplacement de l'organe de verrouillage dans sa position de verrouillage et interrompt la transmission du mouvement de déplacement par le dispositif de déplacement à la pièce mobile en vue de son déplacement dans sa position de fonctionnement, et qui coopère avec la pièce mobile (23), l'organe de verrouillage (85) étant couplé à la pièce mobile et cette pièce mobile, lors de son déplacement dans sa position de fonctionnement, commandant le déplacement de l'organe de verrouillage dans sa position de verrouillage.

2. Appareil suivant la revendication 1, caractérisé en ce que la pièce mobile (23) est déplaçable dans un premier sens de sa position de repos dans une position intermédiaire, et dans un second sens de sa position intermédiaire dans sa position de fonctionnement, qu'avec cette pièce mobile coopère un dispositif de libération (72) qui, lorsque la touche est déplacée dans sa position d'enclenchement, libère la pièce mobile en vue de son déplacement par la force d'un ressort de déplacement (66) agissant sur cette pièce dans le premier sens de déplacement de sa position de repos dans sa position intermédiaire, que le déplacement de la pièce mobile dans sa position intermédiaire est bloqué par l'organe de commande (73, 74) coopérant avec cette pièce dans sa position de blocage et est débloqué dans sa position de déblocage et que, lorsque la pièce mobile est bloquée par l'organe de commande, le dispositif de déplacement (35), en vue de l'interruption de la transmission du mouvement de déplacement à la pièce mobile, reste hors de prise d'avec celui-ci et, lorsque la pièce mobile est déplacée dans sa position intermédiaire, le dispositif de déplacement, en vue de la transmission du mouvement de déplacement à la pièce mobile, peut être amené en prise avec celle-ci afin de la déplacer dans le second sens de déplacement de sa position intermédiaire dans sa position de fonctionnement.

3. Appareil suivant la revendication 2, caractérisé en ce que le dispositif de déblocage est formé par une première saillie (72) qui s'étend à partir de la touche essentiellement dans un sens opposé au premier sens de déplacement de la pièce mobile, et la pièce mobile présente un prolongement (71) s'étendant en substance perpendiculairement au premier sens de déplacement et prévu pour coopérer avec la première saillie, qui, lorsque la touche se trouve dans sa position de déclenchement, porte contre la première saillie sous l'effet de la force du ressort de déplacement (66), de sorte que, lors du déplacement de la touche dans sa position d'enclenchement, la première saillie l'accompagne et le prolongement de la pièce mobile est alors débloqué en vue de son déplacement par la force du ressort de déplacement, dans le premier sens de déplacement, de sa position de repos dans sa position intermédiaire.

4. Appareil suivant la revendication 3, caractérisé en ce que l'organe de verrouillage est formé par le prolongement (71, Fig. 9) de la pièce mobile, qui, lorsque la touche a été déplacée dans sa position d'enclenchement, s'engage derrière la première saillie (72) de celle-ci, lorsque la pièce mobile a été déplacée dans sa position intermédiaire, afin de retenir la touche dans sa position d'enclenchement.

5. Appareil suivant la revendication 2 ou 3, caractérisé en ce que l'organe de verrouillage est formé par une section (85) de la pièce mobile et que la touche comporte une seconde saillie (86) qui s'étend à partir de cette touche dans un sens essentiellement opposé au second sens de déplacement de la pièce mobile et qui s'engage derrière la section de la pièce mobile prévue à titre d'organe de verrouillage, lorsque la touche est déplacée dans sa position d'enclenchement et que la pièce mobile est déplacée dans sa position de fonctionnement pour retenir la touche dans sa position d'enclenchement.

Fig.1

Fig.2

Fig.3

EP 0 149 504 B1

Fig.4

Fig.5

Fig.6

Fig.7

Fig.8

Fig.9

Fig.10

Fig.11